# EUROPÄISCHE PATENTSCHRIFT

(11) **EP 0 696 619 B1**
(45) Veröffentlichungstag und Bekanntmachung des Hinweises auf die Patenterteilung: **14.11.2001**
(21) Anmeldenummer: 95810447.3
(22) Anmeldetag: 06.07.1995
(51) Int. Cl.: C09B 44/04, D06P 1/08, C09B 35/025, C09B 35/037, C09B 29/00, C09B 29/08

(54) **Verfahren zum Färben von Papier**
Process for dyeing of paper
Procédé pour colorer du papier

(30) Priorität: 15.07.1994 CH 226994
(43) Veröffentlichungstag der Anmeldung: 14.02.1996
(73) Patentinhaber: Ciba Specialty Chemicals Holding Inc., 4057 Basel (CH)
(72) Erfinder: Käser, Adolf, Dr., CH-4103 Bottmingen (CH)

(56) Entgegenhaltungen:
- EP-A- 0 306 452
- DE-A- 1 965 994
- GB-A- 1 299 080
- GB-A- 2 133 030
- US-A- 4 103 092
- US-A- 4 211 697

## Beschreibung

Die vorliegende Erfindung betrifft ein Verfahren zum Färben von Papier sowie neue, in diesem Verfahren eingesetzte kationische oder basische, von Sulfonsäuregruppen freie Azofarbstoffe.

Gegenstand der vorliegenden Erfindung ist ein Verfahren zum Färben von Papier, welches dadurch gekennzeichnet ist, dass man das Papier mit einem Farbstoff der Formel 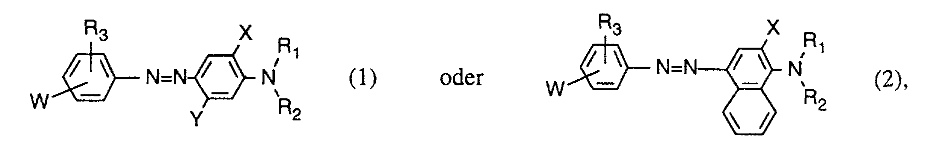 behandelt, worin
- X und Y: unabhängig voneinander je Wasserstoff, Halogen, C₁-C₄-Alkyl, C₁-C₄-Alkoxy, C₁-C₄-Alkylcarbonylamino, Arylcarbonylamino, Ureido oder Arylureido,
- R₁: Wasserstoff, gegebenenfalls substituiertes Alkyl oder Aryl oder R₂,
- R₂: ein Rest der Formel 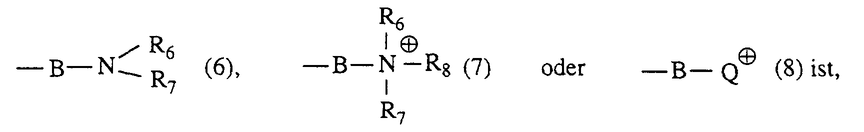
worin B ein geradlinig oder verzweigter C₂-C₁₂-Alkylenrest ist, der durch -NH-CO-, -NH-, -O-C₆H₄-, -O-CO-C₆H₄- oder -O-CO- unterbrochen sein kann oder bei dem die Alkylenkette über eines dieser Brückenglieder mit dem Rest Q^{⊕} verbunden ist,
- R₆: Wasserstoff oder gegebenenfalls substituiertes Alkyl,
- R₇ und R₈: unabhängig voneinander je gegebenenfalls substituiertes Alkyl und
- Q^{⊕}: einen cyclischen kationischen Rest bedeuten, oder worin R₆ und R₇ zusammen mit dem sie verbindenden N-Atom einen gegebenenfalls substituierten 5-, 6-, oder 7-Ring bilden, der weitere Heteroatome enthalten kann, oder worin -NR₆R₇R₈ auch für einen Pyridinium-Ring stehen kann,
oder worin
- R₁ und R₂: zusammen mit dem sie verbindenden N-Atom einen gegebenenfalls substituierten 5-, 6-, oder 7-Ring bilden, der weitere Heteroatome enthalten kann,
- R₃: Wasserstoff, Halogen, C₁-C₄-Alkyl oder C₁-C₄-Alkoxy
- W: ein Rest der Formel 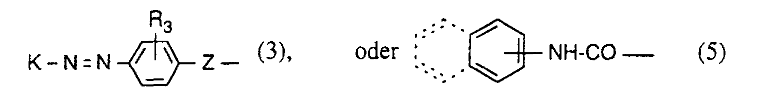 ist, wobei
- K: eine Kupplungskomponente,
- Z: ein Brückenglied der Formel -NR₉-CO-,-CO-NR₉-NR₉-CO-, 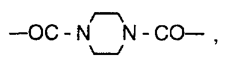 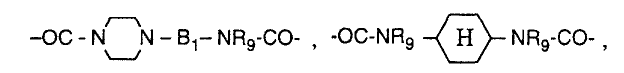 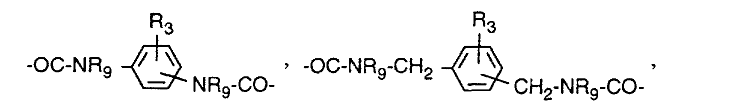 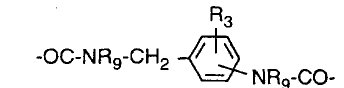 oder -CO-NR₉-B₁-NR₉-CO- ist, wobei R₉ Wasserstoff oder gegebenenfalls substituiertes C₁-C₄-Alkyl, B₁ ein C₂-C₁₂-Alkylenrest, bei dem die Alkylenkette geradlinig oder verzweigt und einmal oder mehrmals, insbesondere ein- oder zweimal, durch -NR₉-, -O- oder -S- unterbrochen sein kann, und R₃ Wasserstoff, Halogen, C₁-C₄-Alkyl oder C₁-C₄-Alkoxy bedeutet,
und wobei der Phenylring im Rest W der Formel (5) durch Methyl, Chlor, Hydroxy, Methoxy, Phenylazo, 4-Carboxyphenylazo oder 3-Pyridylazo substituiert sein kann,
mit der Bedingung, dass in den Farbstoffen, in denen W ein Rest der Formel (3) ist, R₂ der Formel (8) entspricht, worin Q^{⊕} N-C₁-C₄-alkylpiperidinium, N-C₁-C₄-alkylmorpholinium, N-C₁-C₄-alkylpyrrolidinium, N-C₁-C₄-alkylpiperazinium, N-C₁-C₄-alkylpyridinium-3, N-C₁-C₄-alkylpyridinium-4, Pyridinium-1 oder 4-Methylpyridinium-1 bedeutet.

Unter Alkylresten sind erfindungsgemäss generell geradkettige, verzweigte oder cyclische Alkylgruppen zu verstehen. Cycloalkyl weist vorzugsweise 5 bis 8 C-Atome, offenkettiges Alkyl vorzugsweise 1 bis 8, insbesondere 1 bis 4 C-Atome auf.

Als unverzweigtes oder verzweigtes offenkettiges Alkyl kommen z.B. in Frage: Methyl, Ethyl, n- und iso-Propyl, n-, sec.- oder tert.Butyl, n- und iso-Pentyl, n- und iso-Hexyl oder 2-Ethylhexyl.

Diese Alkylreste können ein- oder mehrmals substituiert sein, beispielsweise durch Hydroxy, Carboxy, Halogen, Cyan, C₁-C₄-Alkoxy, durch C₁-C₄-Alkoxy, das durch Hydroxy substituiert ist, durch Amino, Alkylamino, Dialkylamino, Aminocarbonyl, Phenyl, Phenoxy oder Phenylaminocarbonyl, wobei die Phenylgruppe in den drei letztgenannten Resten z.B. durch C₁-C₄-Alkyl, C₁-C₄-Alkoxy oder Phenoxy substituiert sein kann.

Geeignete Reste dieser Art sind z.B.: Hydroxyethyl, 2-Hydroxypropyl-1, 1-Hydroxy-isopropyl, 2-Hydroxy-isopropyl, 2,3-Dihydroxypropyl-1, Methoxyethyl, Ethoxymethyl, Methoxycarbonyloxyethyl, Chlorethyl, Cyanethyl, Benzyl, 1-Phenylethyl, 2-Phenylethyl, Dimethylaminoethyl, Diethylaminoethyl, Hydroxyethylaminoethyl, Dihydroxyethylaminoethyl, Methoxycarbonylethyl oder Aminocarbonylethyl.

Bei Cycloalkyl handelt es sich vor allem um Cyclopentyl und Cyclohexyl; als Substituent kommen vor allem C₁-C₄-Alkyl, insbesondere CH₃, in Frage.

Geeignete Alkoxyreste sind vorzugsweise solche mit 1 bis 4 C-Atomen, z.B. Methoxy, Ethoxy, Propoxy, iso-Propoxy, n-Butoxy, iso-Butoxy oder tert.-Butoxy. Diese Alkoxyreste können substutiert sein, z.B. durch die als Substituenten der Alkylgruppen aufgeführten Reste, insbesondere durch Hydroxy oder C₁-C₄-Alkoxy. Als substituierte Alkoxyreste kommen z.B. Hydroxyethoxy, Methoxyethoxy, 2-Hydroxypropoxy, 1,2-Dihydroxypropoxy-3 oder 1,2-Dimethoxypropoxy-3 in Frage.

Unter Halogen ist Fluor, Brom, Jod oder vor allem Chlor zu verstehen.

Unter Arylresten sind in dieser Anmeldung generell aromatische oder heteroaromatische Reste, insbesondere jedoch Naphthyl- oder vor allem Phenylreste zu verstehen. Alle diese Reste können unsubstituiert oder substituiert sein. Als Substituenten kommen z.B. C₁-C₄-Alkyl, C₁-C₄-Alkoxy, Brom, Chlor, Nitro, Cyan, Carboxy oder C₁-C₄-Alkylcarbonylamino in Betracht. Die besonders bevorzugte Bedeutung von Aryl ist jedoch Phenyl.

Bevorzugte Reste X bei den Farbstoffen der Formeln (1) und (2) sind Wasserstoff, Methyl, Methoxy und Chlor und als Reste Y kommen vor allem Wasserstoff, Methyl, Methoxy, Acetylamino und Chlor in Betracht.

Als Reste R₁ sind vor allem C₁-C₄-Alkylreste geeignet sowie C₁-C₄-Alkylreste, die durch Chlor, Cyan, Phenyl, Methoxycarbonyl, Methoxycarbonyloxy, Mono- oder Di-C₁-C₄-alkylamino substituiert sind, wobei in den Mono- oder Di-C₁-C₄-alkylaminogruppen die Alkylreste wiederum durch Hydroxy, Amino oder Mono- oder Di-C₁-C₄-alkylamino substituiert sein können. Ausserdem kommen als bevorzugte Reste R₁ die nachstehend für R₂ aufgeführten Bedeutungen in Betracht.

Falls R₁ und R₂ zusammen mit dem sie verbindenden N-Atom einen 5-, 6- oder 7-Ring bedeuten, so handelt es sich vor allem um einen Pyrrolidin-, Piperidin-, Morpholin- oder Piperazinring. Der Piperazinrest kann am nicht mit der Kupplungskomponente verbundenen N-Atom substituiert sein, z.B. durch Alkyl, Arylcarbonyl oder Arylaminocarbonyl.

Falls R₆ und R₇ zusammen mit dem sie verbindenden N-Atom einen 5-, 6- oder 7-Ring bedeuten, so handelt es sich vor allem um einen Pyrrolidin-, Piperidin-, Morpholin- oder Piperazinring. Der Piperazinrest kann am nicht mit B verbundenen N-Atom substituiert sein, z.B. durch Alkyl, Arylcarbonyl, Arylaminocarbonyl, oder vor allem durch einen aromatischen carbocyclischen oder heterocyclischen Rest.

Als Rest B kommen vor allem C₂-C₈-Alkylenreste in Betracht, bei denen die Alkylenkette geradlinig oder verzweigt oder auch durch Brückenglieder, wie z.B. -NH-CO-, -NH-, -O-C₆H₄-, -O-CO-C₆H₄- oder -O-CO- unterbrochen sein kann oder bei denen die Alkylenkette über eines dieser Brückenglieder mit dem Rest Q^{⊕} verbunden ist.

Insbesondere geeignete Reste B sind Ethylen, n-Propylen, iso-Propylen oder n-Butylen. Ganz besonders bevorzugt unter diesen ist Ethylen.

Als gegebenenfalls substituierte Alkylreste kommen für R₆, R₇ und R₈ vor allem C₁-C₄-Alkylreste in Betracht, die unsubstituiert oder durch Hydroxy, Amino, Mono-C₁-C₄-alkylamino, Di-C₁-C₄-alkylamino oder Phenyl substituiert sind.

Geeignete Reste Q^{⊕} sind z.B. N-C₁-C₄-alkylpiperidinium, N-C₁-C₄-alkylmorpholinium, N-C₁-C₄-alkylpyrrolidinium oder N-C₁-C₄-alkylpiperazinium, N-C₁-C₄-alkylpyridinium-3 oder N-C₁-C₄-alkylpyridinium-4.

Bevorzugte Bedeutungen für die Reste R₃ sind Chlor, Methyl oder Methoxy, vor allem jedoch Wasserstoff.

Falls W einen Rest der Formel (3) bedeutet, so ist R₃ ebenfalls vorzugsweise Chlor, Methyl oder Methoxy, vor allem jedoch Wasserstoff.

Z bedeutet ein Brückenglied, z.B. -NR₉-CO-, -CO-NR₉-NR₉-CO-, 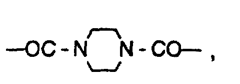 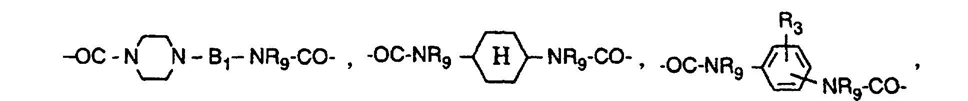 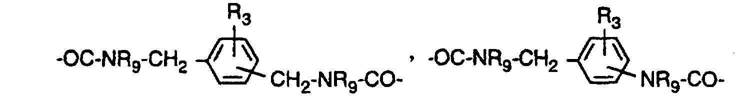 oder -CO-NR₉-B₁-NR₉-CO-, wobei R₉ Wasserstoff oder gegebenenfalls substituiertes C₁-C₄-Alkyl, B₁ ein C₂-C₁₂-Alkylenrest, bei dem die Alkylenkette geradlinig oder verzweigt und einmal oder mehrmals, insbesondere ein- oder zweimal, durch -NR₉-, -O-oder -S- unterbrochen sein kann, und R₃ Wasserstoff, Halogen, C₁-C₄-Alkyl oder C₁-C₄-Alkoxy bedeutet.

R₉ bedeutet vor allem Methyl und insbesondere Wasserstoff und R₃ bedeutet vor allem Wasserstoff.

Vorzugsweise bedeutet B₁ unsubstituiertes oder durch Hydroxy substituiertes
C₂-C₄-Alkylen, (C₂-C₆-Alkylen)-O-(C₂-C₆-Alkylen),
(C₂-C₆-Alkylen)-O-(C₂-C₆-Alkylen)-O-(C₂-C₆-Alkylen) oder
(C₂-C₆-Alkylen)-NR₉-(C₂-C₆-Alkylen).

Von den genannten Brückengliedern Z sind die folgenden besonders bevorzugt: -NH-CO-, -CO-NH-NH-CO-, 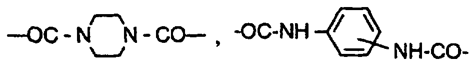 und -CO-NH-(C₂-C₄-Alkylen)-NH-CO-.

In der Formel (3) bedeutet K eine Kupplungskomponente, insbesondere eine aus der Chemie der Azofarbstoffe für Papier bekannte Kupplungskomponente.

### Bevorzugte Kupplungskomponenten sind die folgenden:

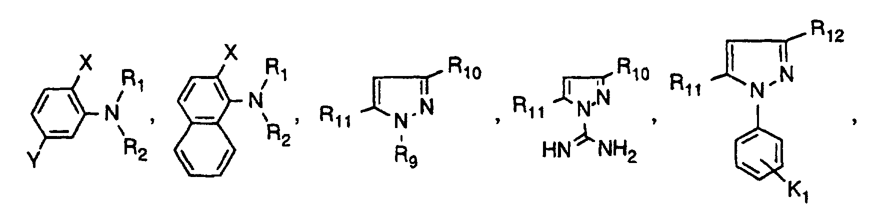

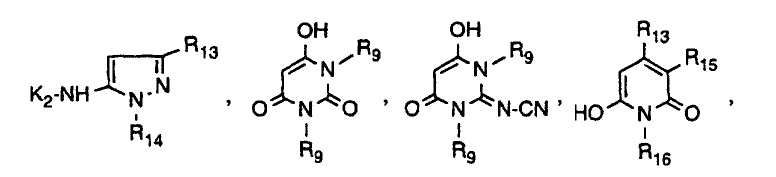

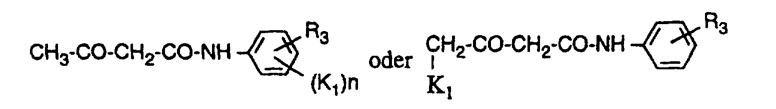

worin X, Y, R₁ und R₂ die unter den Formeln (1) und (2) angegebenen Bedeutungen aufweisen, R₁₀ C₁-C₄-Alkyl, Carboxy oder K₂, R₁₁ Hydroxy oder Amino, R₉ Wasserstoff oder gegebenenfalls substituiertes C₁-C₄-Alkyl, R₁₂ C₁-C₄-Alkyl oder K₂, R₁₃ C₁-C₄-Alkyl, R₁₄ Wasserstoff, gegebenenfalls substituiertes C₁-C₄-Alkyl oder gegebenenfalls substituiertes Phenyl, R₁₅ Wasserstoff, Chlor, Cyan oder Carbonamido, R₁₆ Wasserstoff, gegebenenfalls substituiertes C₁-C₄-Alkyl oder K₃, n 1 oder 2, K₁ 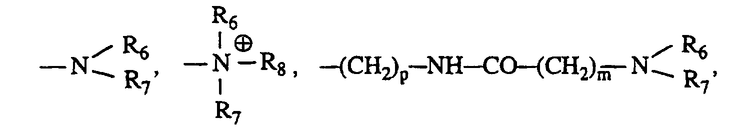 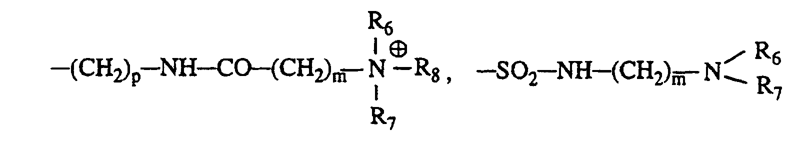 oder 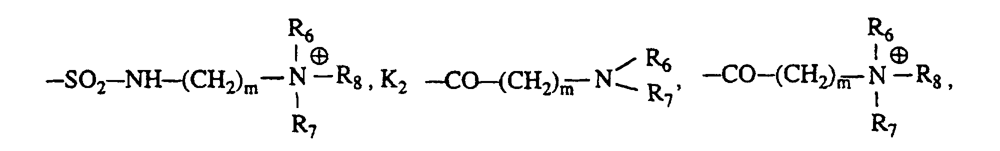 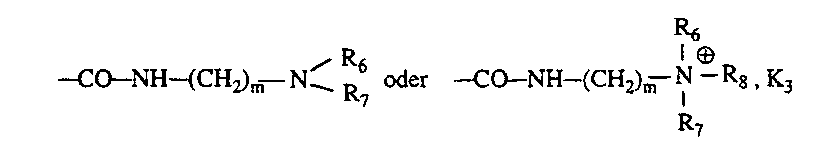 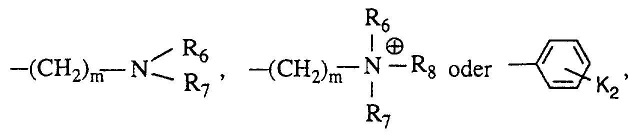 und m 1 bis 4 bedeutet und R₆, R₇ und R₈ die unter den Formeln (6) und (7) angegebenen Bedeutungen aufweisen. Unter diesen sind die Kupplungskomponenten der Formel 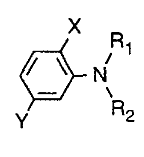 besonders bevorzugt.

Die erfindungsgemässen Farbstoffe mit kationischen Gruppen enthalten selbstverständlich äquivalente Mengen an Anionen.

Als Anion An⊖ kommen sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Falls die erfindungsgemässen Farbstoffe weitere kationische Gruppen tragen, so enthalten sie als zusätzliche Anionen vorzugsweise ebenfalls die vorstehend aufgeführten Anionen.

Eine ganz besonders bevorzugte Ausführungsform des erfindungsgemässen Verfahrens besteht darin, dass man einen Farbstoff der Formel 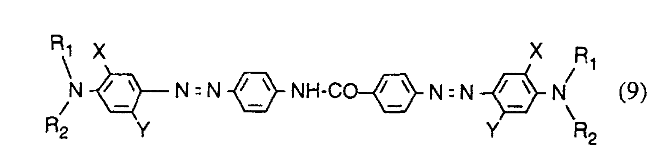 oder 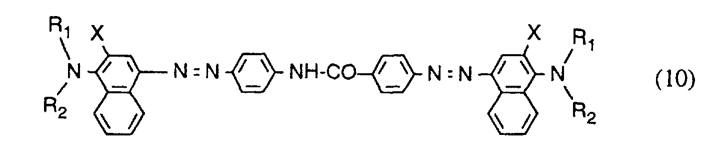 verwendet, worin
- X und Y: unabhängig voneinander je Wasserstoff, Halogen, C₁-C₄-Alkyl, C₁-C₄-Alkoxy, C₁-C₄-Alkylcarbonylamino, Arylcarbonylamino, Ureido oder Arylureido,
- R₁: Wasserstoff, gegebenenfalls substituiertes Alkyl oder Aryl oder R₂ und
- R₂: die obengenannte Bedeutung hat.

Die Farbstoffe der Formeln (9) und (10), in welchen R₂ die im Anspruch 17 genannte Bedeutung hat, sind neu und stellen einen weiteren Gegenstand der vorliegenden Erfindung dar. Man erhält sie z.B., indem man 4,4'-Diaminobenzanilid diazotiert und auf eine Kupplungskomponente der Formel 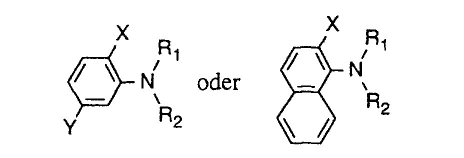 kuppelt.

Die Diazotierung erfolgt auf bekannte Weise, etwa mit Natriumnitrit in saurem, z.B. schwefelsaurem, wässrigem Medium.

Die Kupplung des diazotierten 4,4'-Diaminobenzanilids auf die Kupplungskomponente der obigen Formeln erfolgt ebenfalls in bekannter Weise, beispielsweise in saurem, wässrigem oder wässrig-organischem Medium, vorteilhaft bei Temperaturen von -10 bis 40°C, insbesondere unter 10°C. Als Säuren verwendet man z.B. Salzsäure, Essigsäure, Schwefelsäure oder Phosphorsäure. Diazotierung und Kupplung können beispielsweise im Eintopfverfahren, also im gleichen Reaktionsmedium, durchgeführt werden.

Die übrigen erfindungsgemäss verwendeten Farbstoffe sind bekannt oder können auf an sich bekannte Art hergestellt werden. Überraschenderweise eignen sie sich besonders gut zum Färben von Papier und zeichnen sich dabei insbesondere durch eine gute Lichtechtheit der erhaltenen Färbungen aus.

Die Farbstoffe können nach allen in der Papierindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichtem oder ungebleichtem Zellstoff verschiedener Provenienz, wie Nadel- oder Laubholz-sulfit- und/oder -sulfat-Zellstoff. Sie sind auch geeignet zum Färben von holzschliffhaltigem Papier.

Die erfindungsgemässen Farbstoffe der Formel (9) und (10) eignen sich insbesondere zum Färben von Papier, da sie eine hohe Substantivität auf dieses Substrat aufweisen. Man erhält Färbungen in gelben bis braunen, insbesondere orangenen Farbtönen, die sich durch gute Echtheiten auszeichnen. Farbstoffe mit kationischen Ladungen sind ausserdem besonders geeignet zum Färben von holzhaltigem Papier (Holzschliff). Die Abwässer sind in den meisten Fällen völlig farblos.

Die Farbstoffe der Formel (1) und (2) können als feste oder flüssige Handelsform formuliert und zum Färben von Papier eingesetzt werden.

Als Pulver oder Granulat werden die Farbstoffe insbesondere bei der diskontinuierlichen Massefärbung verwendet, wobei der Farbstoff chargenweise im Pulper, Holländer oder in der Mischbütte zugesetzt wird. Dabei werden die Farbstoffe vorzugsweise als Farbstoffzubereitungen verwendet, die Coupagemittel, z.B. Harnstoff als Lösungsvermittler, Dextrine, Glaubersalz, Kochsalz sowie Dispergatoren, Entstäubungsmittel und Sequestriermittel, wie Tetranatriumpyrophosphat, enthalten können.

Ein weiterer Gegenstand der Erfindung sind somit feste Farbstoffzubereitungen zum Färben von Papier, welche Farbstoffe der Formel (1) oder (2) enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer zu geben oder an irgendeinem anderen geeigneten Punkt der Papierherstellung zuzufügen.

Ein weiterer Gegenstand der Erfindung sind daher konzentrierte wässrige Lösungen von Farbstoffen der Formel (1) oder (2), welche dadurch gekennzeichnet sind, dass sie mindestens 5, beispielsweise 8 bis 30 Gewichtsprozent Farbstoff, bezogen auf das Gesamtgewicht der Lösung, enthalten.

Konzentrierte wässrige Lösungen von Farbstoffen der Formel (1) oder (2) können z.B. hergestellt werden, indem man die bei der Herstellung des Farbstoffes anfallende Farbstoffsuspension filtriert, gegebenenfalls entsalzt, z.B. durch ein Membrantrennverfahren und durch Zusatz von Hilfsmitteln, wie Harnstoff, ε-Caprolactam oder Polyethylenglykol stabilisiert. Man kann aber auch den isolierten Farbstoff in Salzsäure anschlämmen, erneut filtrieren und den Filterkuchen mit Lithiumhydroxid oder einem geeigneten Amin, z.B. einem Alkanolamin, und der nötigen Menge Wasser vermischen. Schliesslich kann man auch die Kupplung in Gegenwart von Lithiumhydroxid, Ammoniak oder Alkanolamin durchführen und die Syntheselösung anschliessend entsalzen. Derartige Farbstofflösungen eignen sich zum Färben einer Papierpulpe in Anwesenheit von Kollophonium und Alaunschlichte.

Die so hergestellten Farbstofflösungen enthalten vorzugsweise auf 100 Teile Farbstoff 400 bis 900 Teile Wasser, 0 bis 200 Teile weitere Zusätze wie Harnstoff, ε-Caprolactam oder Polyethylenglykol sowie 0 bis 400 Teile einer organischen Carbonsäure, z.B. Ameisensäure, Essigsäure, Propionsäure oder Milchsäure.

Die erfindungsgemässen wässrigen Konzentrate, die bei Lagerungstemperaturen bis zu - 5°C stabil sind, eignen sich zum Färben von Papier, auf welchem sie mit oder ohne Verwendung einer Schlichte attraktive gelbe, orangene oder braune Farbtöne ergeben.

Die Farbstoffe der Formel (1) und (2) können ausserdem auch zum Färben von Textilmaterialien aus Cellulose, z.B. Baumwolle, sowie zum Färben von Leder und Glasfasern eingesetzt werden.

In EP-A-306 452 sind kationische Disazofarbstoffe beschrieben,die im Gegensatz zu den erfindungsgemässen Farbstoffen als Brückenglied Stilben enthalten. US-A-4,103,092 und GB-A-1 299 080 beschreiben Farbstoffe mit endständigen -NRR' Gruppen, die jedoch nicht ringförmig sind, und ausserdem andere Brückenglieder enthalten als die
erfindungsgemässen Farbstoffe.

In den nachfolgenden Beispielen bedeuten die Teile Gewichtsteile, und die Temperaturen
sind in Celsiusgraden angegeben.

Beispiele 1 - 19. Die folgenden Farbstoffe färben Papier in gelb- bis rotstichigen orangenen oder braunen Farbtönen mit guten Echtheiten.

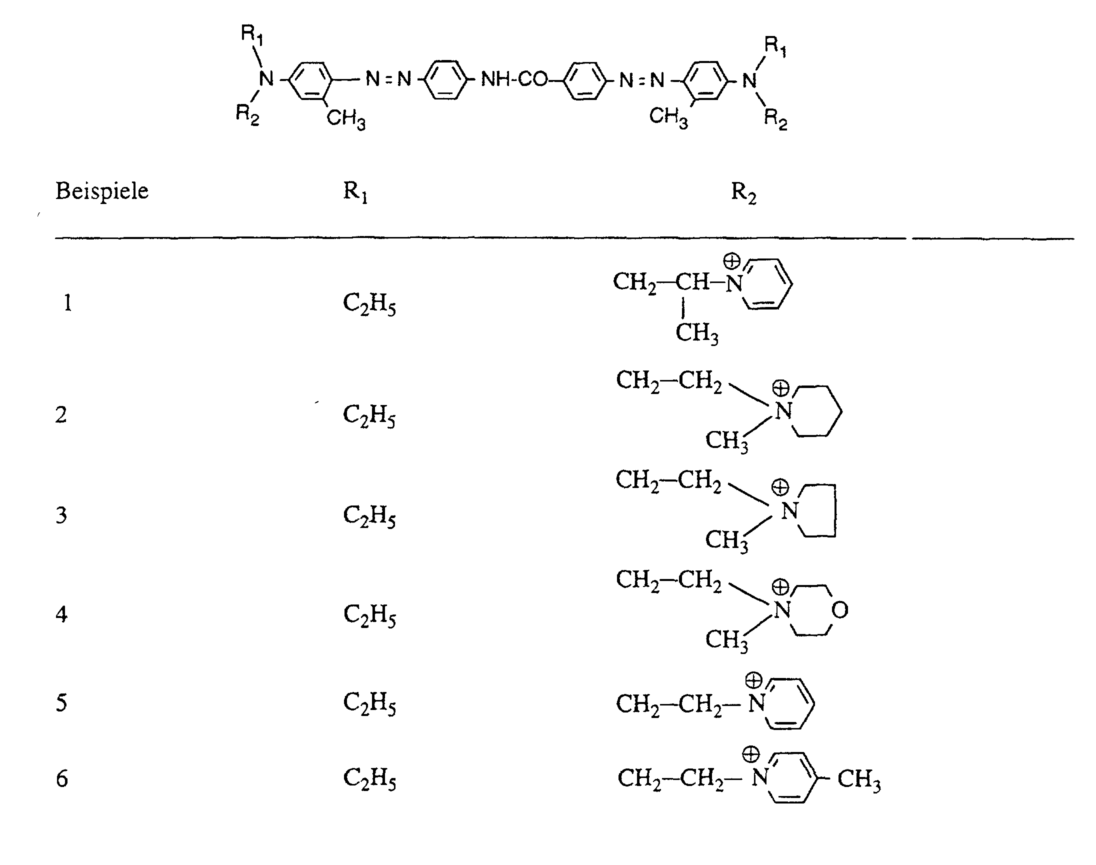

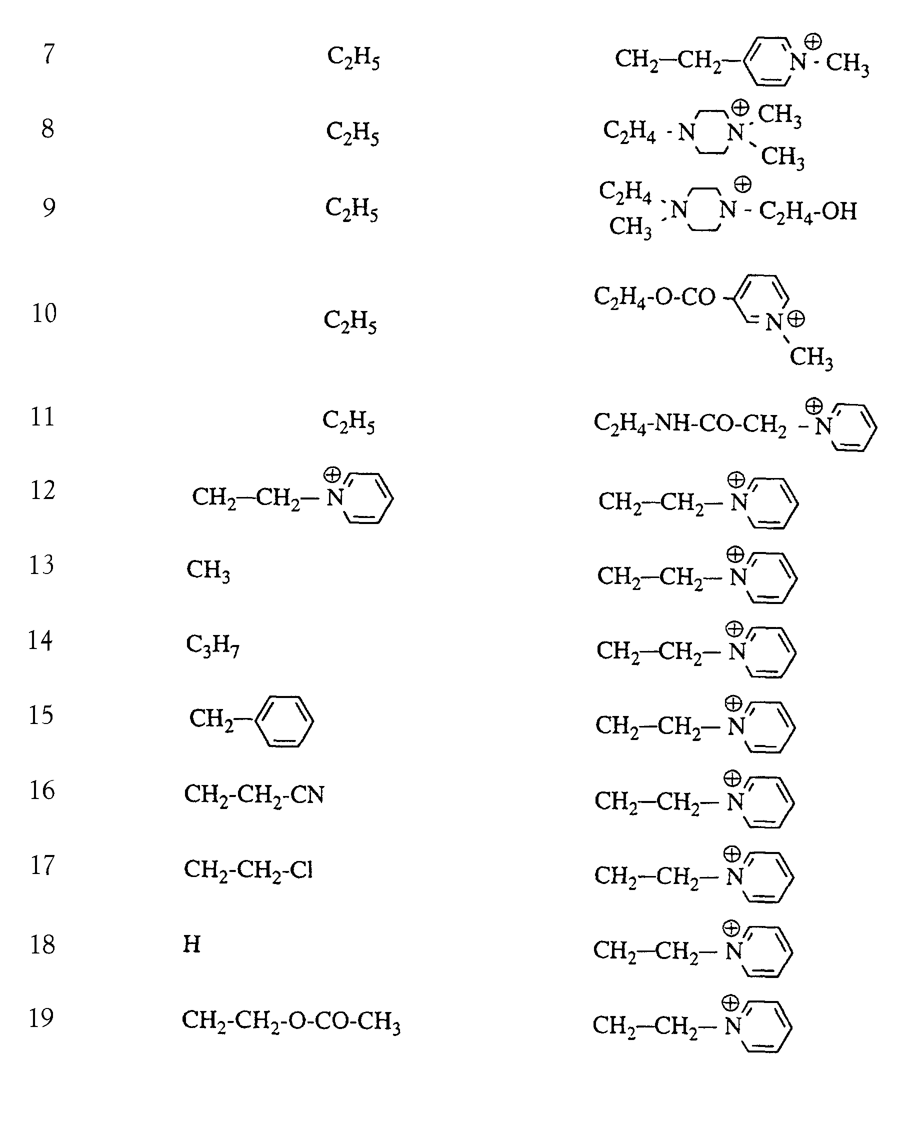

Beispiele 20-25: Die folgenden Farbstoffe färben Papier in gelb- bis rotstichigen orangenen oder braunen Farbtönen mit guten Echtheiten.

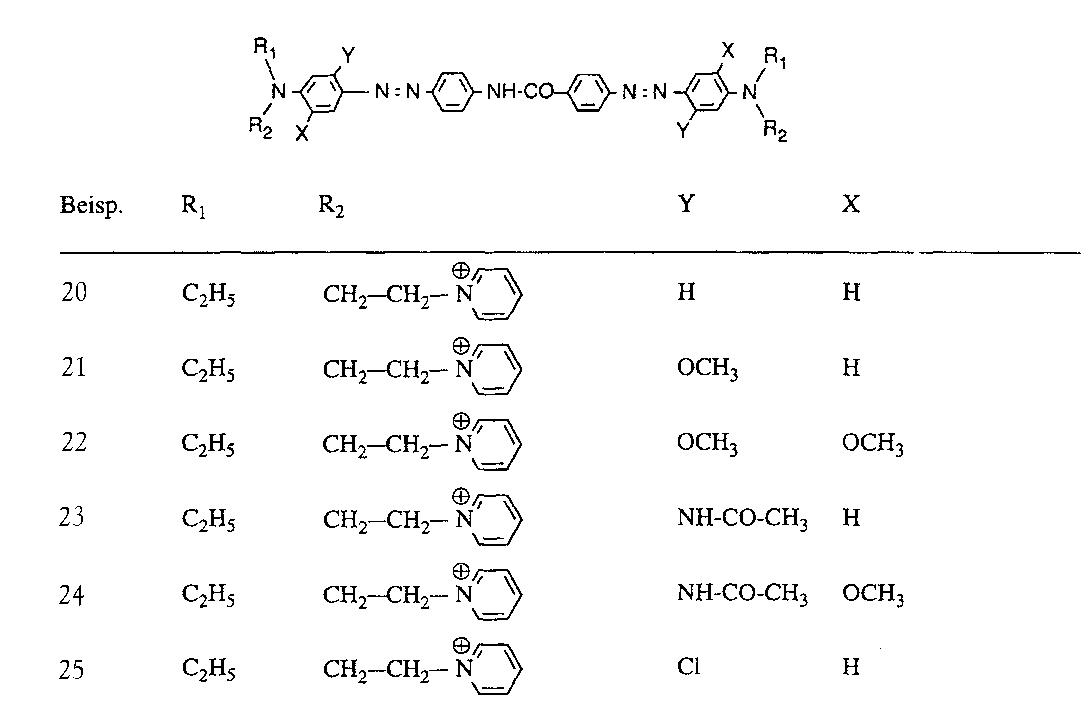

Beispiele 26-38: Die folgenden Farbstoffe färben Papier in gelb- bis rotstichigen orangenen Farbtönen mit guten Echtheiten.

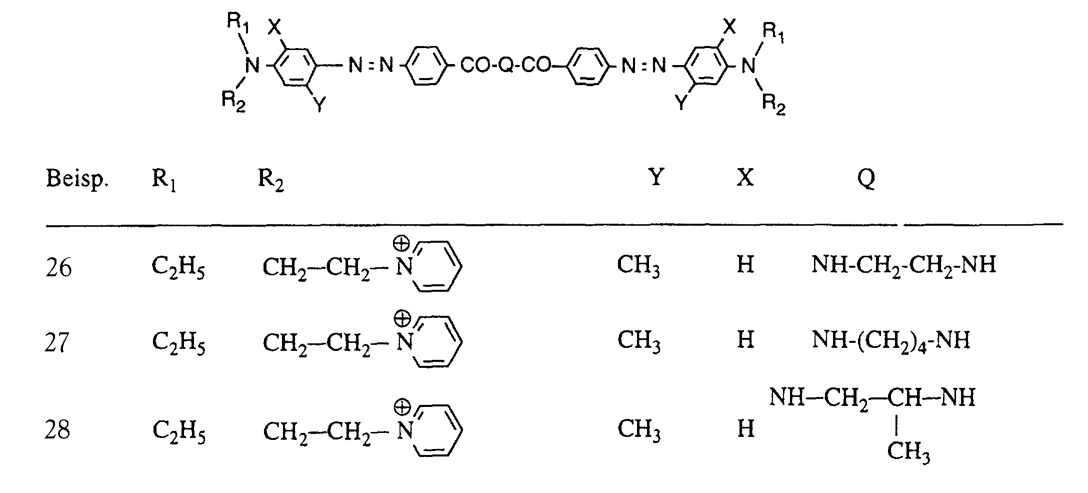

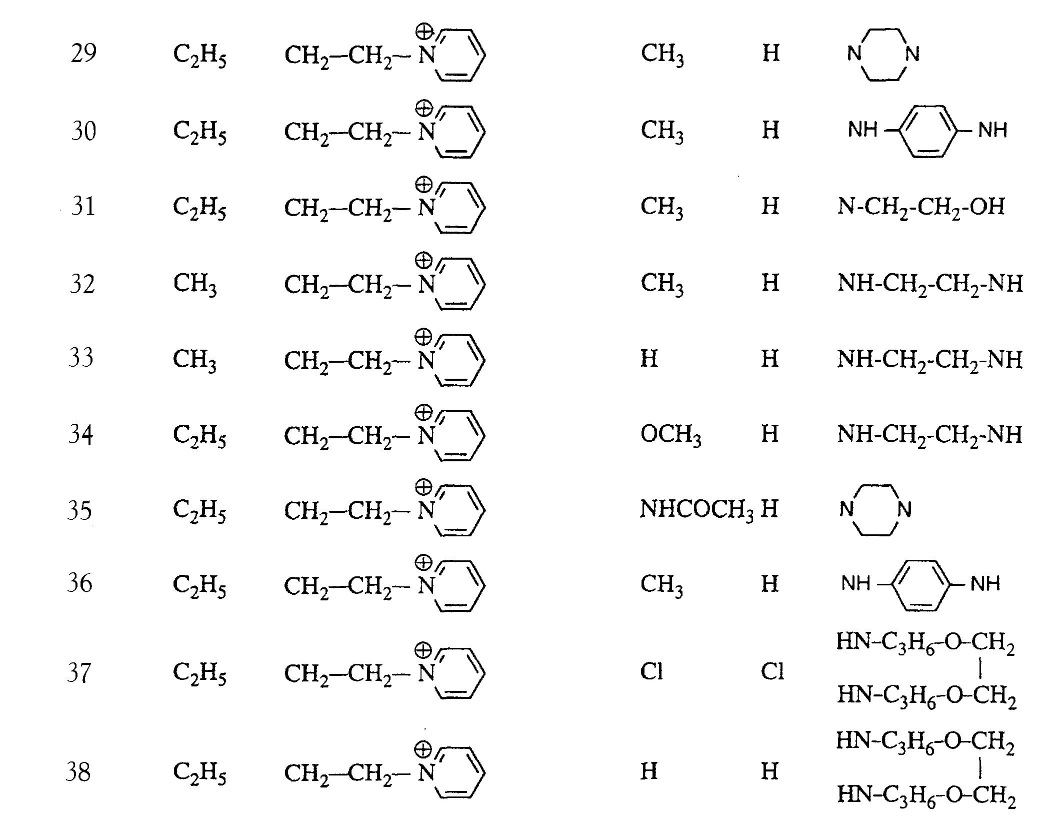

Beispiele 39 bis 56. Die folgenden Farbstoffe färben Papier in Gelb- bis Orangetönen.

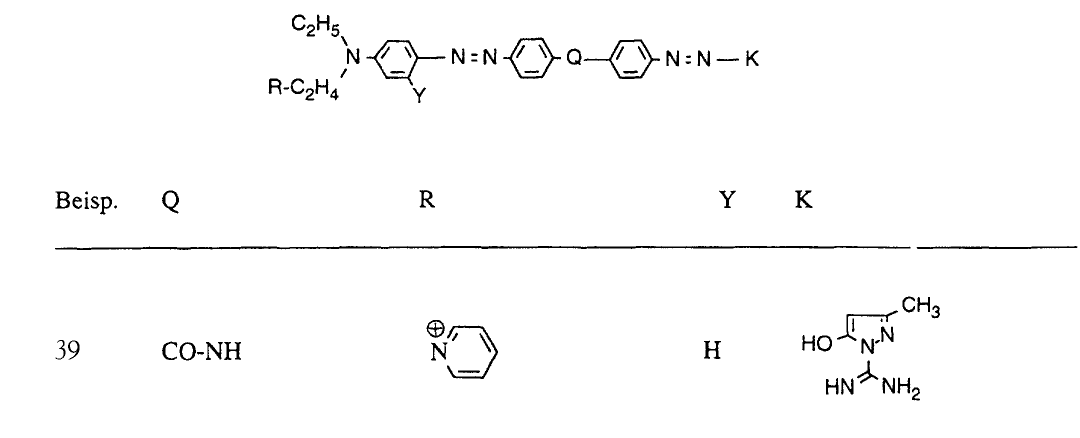

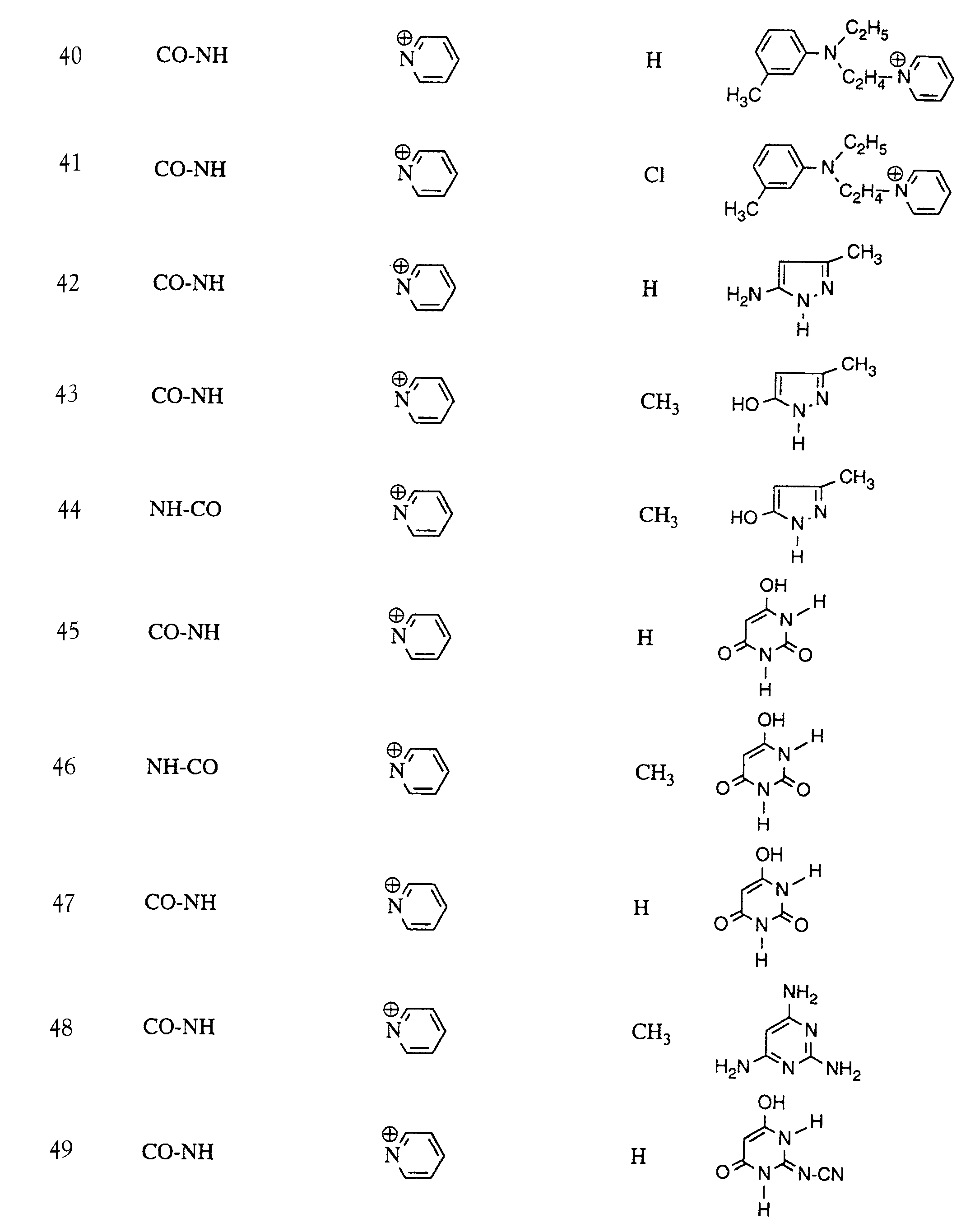

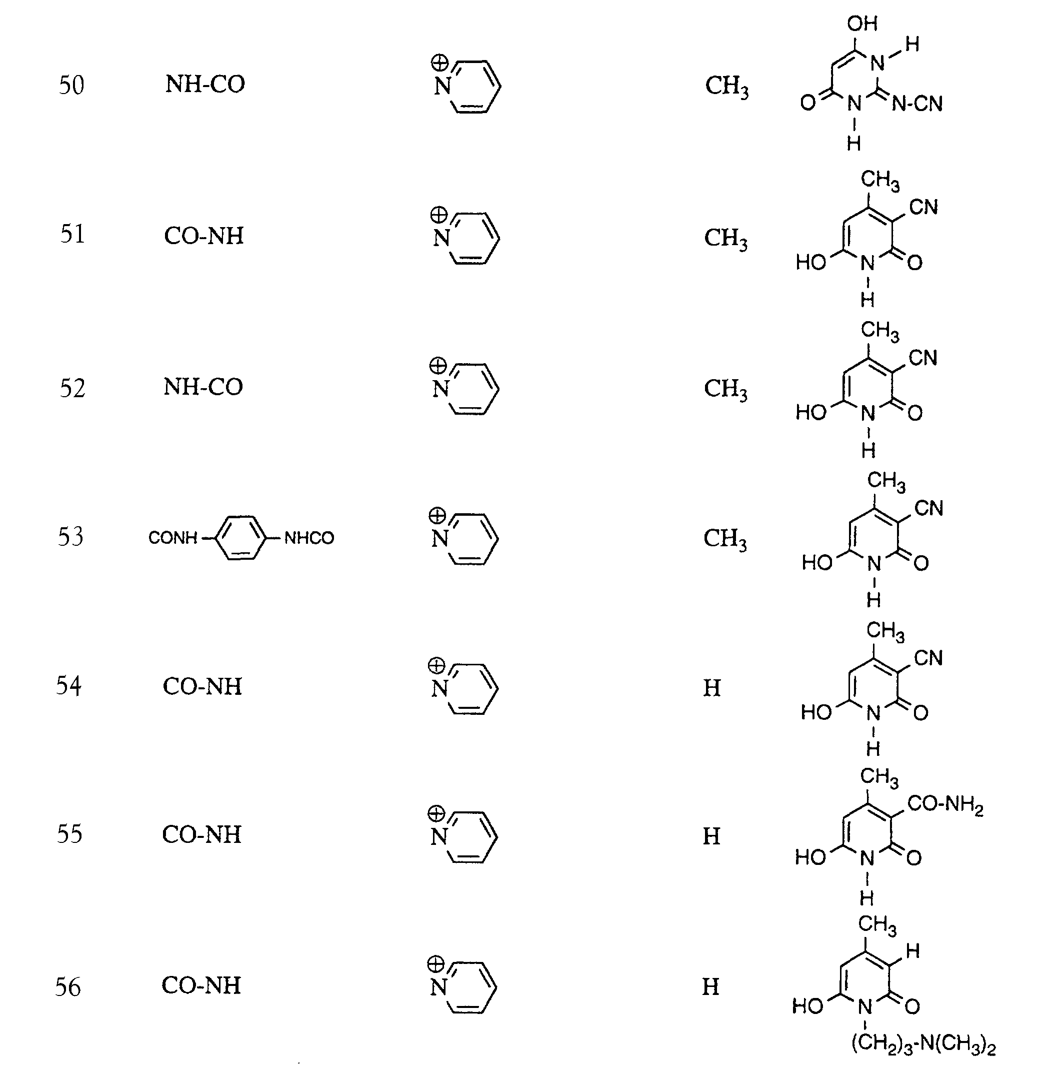

Beispiele 57 bis 61 Auf analoge Art wie in den Beispielen 119 und 120 beschrieben werden die folgenden Farbstoffe hergestellt. Sie färben Papier in Gelb- bis Orangetönen.

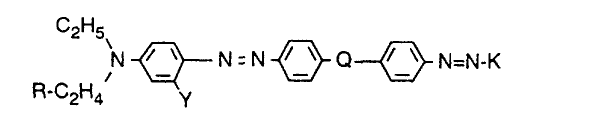

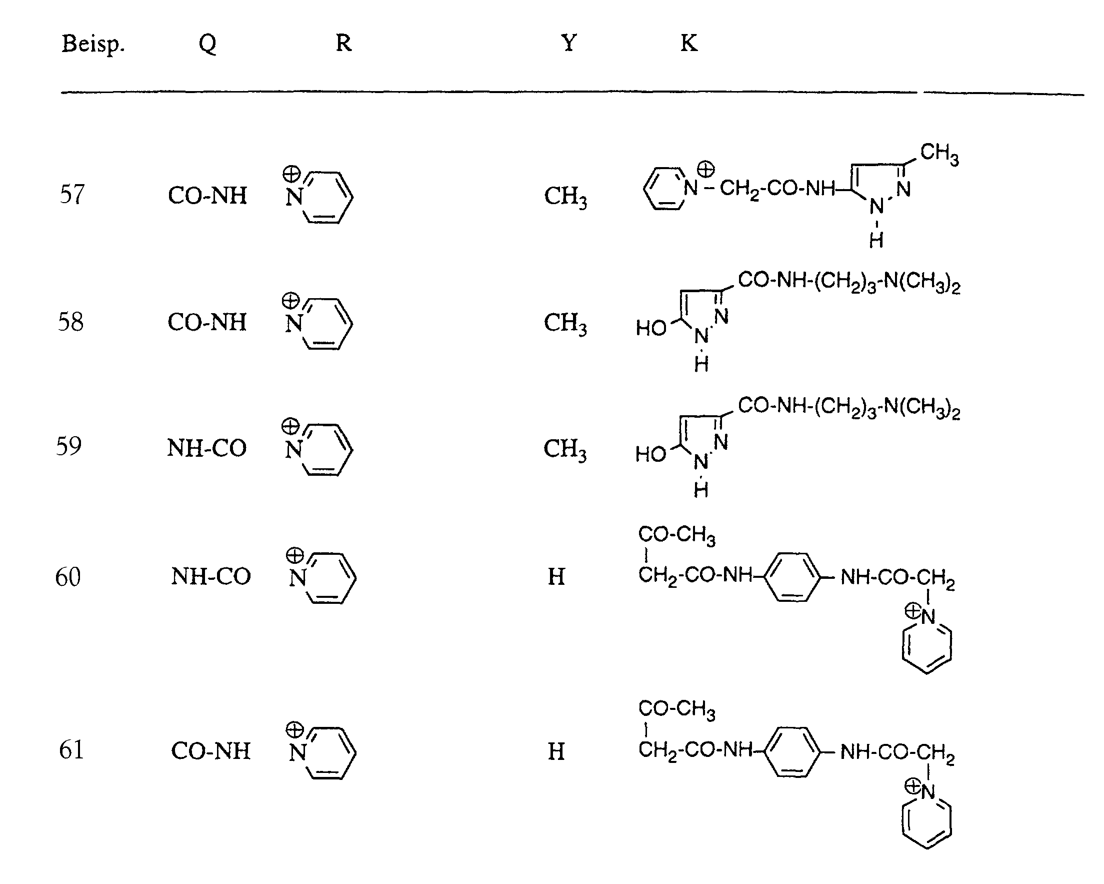

Beispiele 62 bis 73: Durch Diazotieren der entsprechenden Amine und Kuppeln auf die Anilin-Kupplungskomponente werden die folgenden Farbstoffe hergestellt. Sie färben Papier in gelb- bis rotstichigen Orangetönen mit ebenfalls guten Echtheiten.

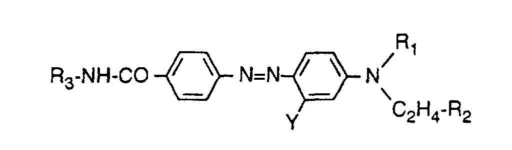

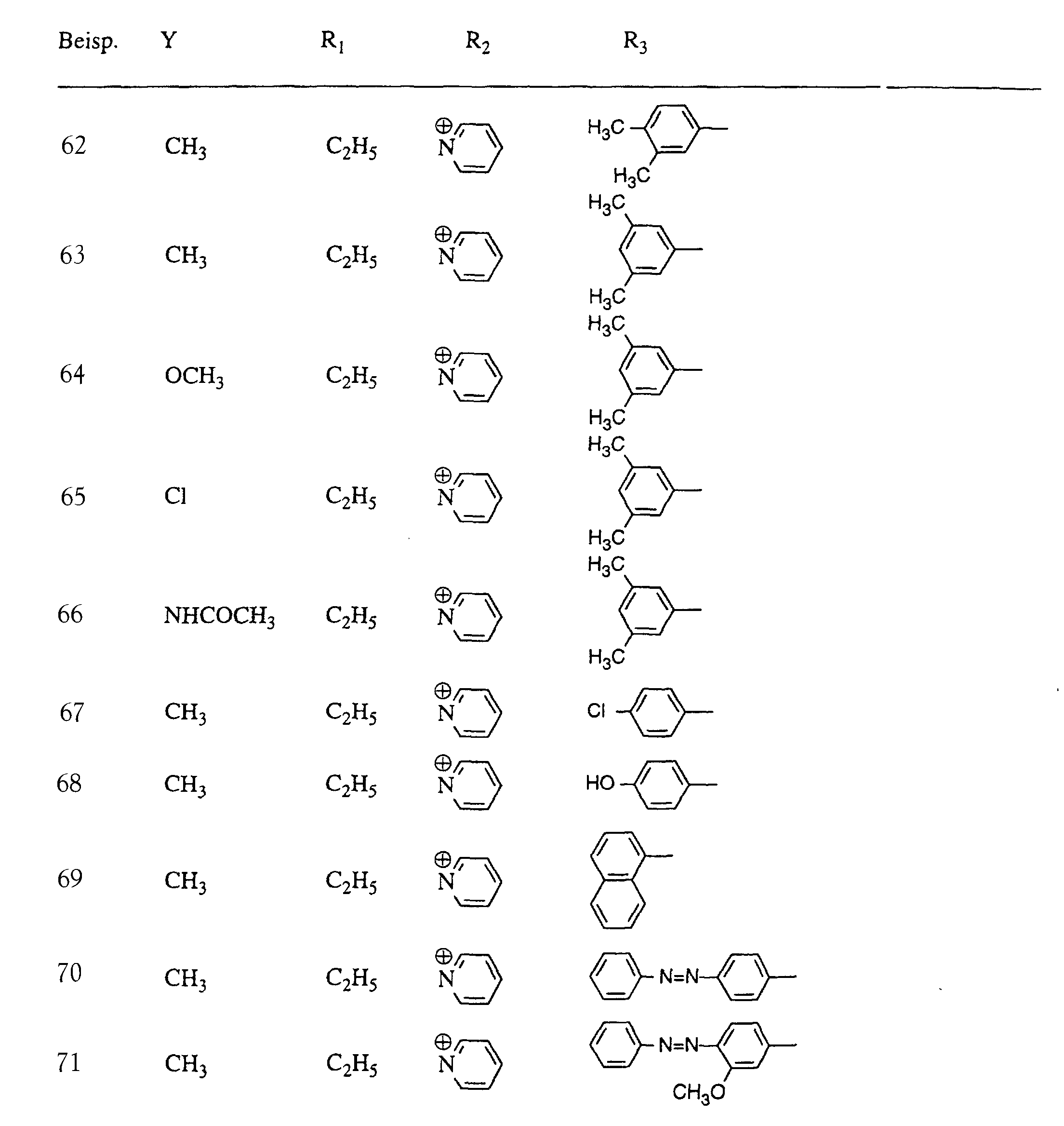

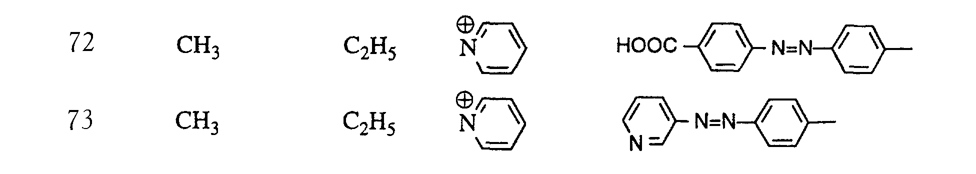

## Patentansprüche

1. Verfahren zum Färben von Papier, **dadurch gekennzeichnet, dass** man das Papier mit einem Farbstoff der Formel 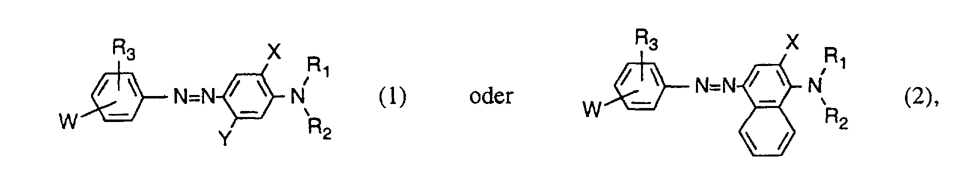 behandelt, worin
X und Y unabhängig voneinander je Wasserstoff, Halogen, C₁-C₄-Alkyl, C₁-C₄-Alkoxy, C₁-C₄-Alkylcarbonylamino, Arylcarbonylamino, Ureido oder Arylureido,
R₁ Wasserstoff, gegebenenfalls substituiertes Alkyl oder Aryl oder R₂,
R₂ ein Rest der Formel 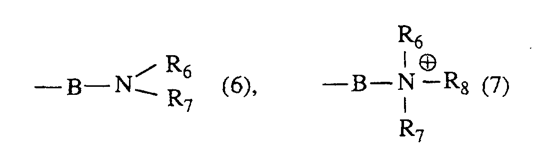 oder ―B―Q^{⊕} (8) ist, worin B ein geradlinig oder verzweigter C₂-C₁₂-Alkylenrest ist, der durch -NH-CO-, -NH-, -O-C₆H₄-, -O-CO-C₆H₄- oder -O-CO- unterbrochen sein kann oder bei dem die Alkylenkette über eines dieser Brückenglieder mit dem Rest Q^{⊕} verbunden ist,
R₆ Wasserstoff oder gegebenenfalls substituiertes Alkyl,
R₇ und R₈ unabhängig voneinander je gegebenenfalls substituiertes Alkyl und
Q^{⊕} einen cyclischen kationischen Rest bedeuten, oder worin R₆ und R₇ zusammen mit dem sie verbindenden N-Atom einen gegebenenfalls substituierten 5-, 6-, oder 7-Ring bilden, der weitere Heteroatome enthalten kann, oder worin -NR₆R₇R₈ auch für einen Pyridinium-Ring stehen kann, oder worin
R₁ und R₂ zusammen mit dem sie verbindenden N-Atom einen gegebenenfalls substituierten 5-, 6-, oder 7-Ring bilden, der weitere Heteroatome enthalten kann,
R₃ Wasserstoff, Halogen, C₁-C₄-Alkyl oder C₁-C₄-Alkoxy
W ein Rest der Formel 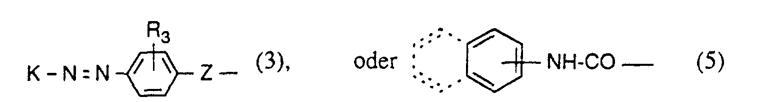 ist, wobei
K eine Kupplungskomponente,
Z ein Brückenglied der Formel -NR₉-CO-,-CO-NR₉-NR₉-CO-, 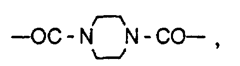 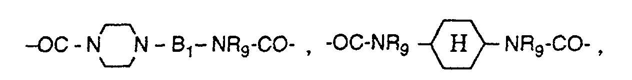 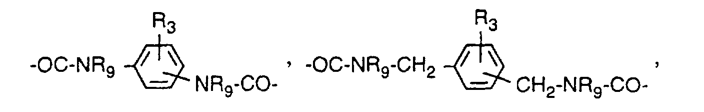 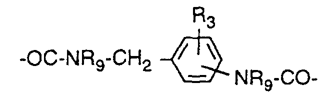
oder -CO-NR₉-B₁-NR₉-CO- ist, wobei R₉ Wasserstoff oder gegebenenfalls substituiertes C₁-C₄-Alkyl, B₁ ein C₂-C₁₂-Alkylenrest, bei dem die Alkylenkette geradlinig oder verzweigt und einmal oder mehrmals, insbesondere ein- oder zweimal, durch -NR₉-, -O- oder -S- unterbrochen sein kann, und R₃ Wasserstoff, Halogen, C₁-C₄-Alkyl oder C₁-C₄-Alkoxy bedeutet,
und wobei der Phenylring im Rest W der Formel (5) durch Methyl, Chlor, Hydroxy, Methoxy, Phenylazo, 4-Carboxyphenylazo oder 3-Pyridylazo substituiert sein kann,
mit der Bedingung, dass in den Farbstoffen, in denen W ein Rest der Formel (3) ist, R₂ der Formel (8) entspricht, worin Q^{⊕} N-C₁-C₄-alkylpiperidinium, N-C₁-C₄-alkylmorpholinium, N-C₁-C₄-alkylpyrrolidinium, N-C₁-C₄-alkylpiperazinium. N-C₁-C₄-alkylpyridinium-3, N-C₁-C₄-alkylpyridinium-4, Pyridinium-1 oder 4-Methylpyridinium-1 bedeutet.

2. Verfahren gemäss Anspruch 1, **dadurch gekennzeichnet, dass** man einen Farbstoff der Formel (1) oder (2) verwendet, worin X Wasserstoff, Methyl, Methoxy oder Chlor bedeutet.

3. Verfahren gemäss einem der Ansprüche 1 oder 2, **dadurch gekennzeichnet, dass** man einen Farbstoff der Formel (1) verwendet, worin Y Wasserstoff, Methyl, Methoxy, Acetylamino oder Chlor bedeuten.

4. Verfahren gemäss Anspruch 1, **dadurch gekennzeichnet, dass** man einen Farbstoff der Formel (1) oder (2) verwendet, worin R₆, R₇ und R₈ unabhängig voneinander je einen C₁-C₄-Alkylrest bedeuten, der unsubstituiert oder durch Hydroxy, Amino, Mono-C₁-C₄-alkylamino, Di-C₁-C₄-alkylamino oder Phenyl substituiert ist, oder worin R₆ und R₇ zusammen mit dem sie verbindenden N-Atom einen Pyrrolidin-, Piperidin-, Morpholin- oder Piperazinring bilden.

5. Verfahren gemäss Anspruch 1, **dadurch gekennzeichnet, dass** man einen Farbstoff der Formel (1) oder (2) verwendet, worin Q^{⊕} N-C₁-C₄-alkylpiperidinium, N-C₁-C₄-alkylmorpholinium, N-C₁-C₄-alkylpyrrolidinium, N-C₁-C₄-alkylpiperazinium, N-C₁-C₄-alkylpyridinium-3 oder N-C₁-C₄-alkylpyridinium-4 bedeutet.

6. Verfahren gemäss einem der Ansprüche 1 bis 5, **dadurch gekennzeichnet, dass** man einen Farbstoff der Formel (1) oder (2) verwendet, worin B einen C₂-C₃-Alkylenrest bedeutet, bei dem die Alkylenkette geradlinig oder verzweigt oder auch durch -NH-CO-, -NH-, -O-C₆H₄-, -O-CO-C₆H₄- oder -O-CO- unterbrochen sein kann oder bei dem die Alkylenkette über eines dieser Brückenglieder mit dem Rest Q^{⊕} verbunden ist.

7. Verfahren gemäss Anspruch 6, **dadurch gekennzeichnet, dass** man einen Farbstoff der Formel (1) oder (2) verwendet, worin B Ethylen, n-Propylen, iso-Propylen oder n-Butylen bedeutet.

8. Verfahren gemäss einem der Ansprüche 1 bis 7, **dadurch gekennzeichnet, dass** man einen Farbstoff der Formel (1) oder (2) verwendet, worin R₁ einen C₁-C₄-Alkylrest oder einen C₁-C₄-Alkylrest, der durch Chlor, Cyan, Phenyl, Methoxycarbonyl, Methoxycarbonyloxy, Mono- oder Di-C₁-C₄-alkylamino substituiert ist, wobei in den Mono- oder Di-C₁-C₄-alkylaminogruppen die Alkylreste wiederum durch Hydroxy, Amino oder Mono- oder Di-C₁-C₄-alkylamino substituiert sein können.

9. Verfahren gemäss einem der Ansprüche 1 bis 8, **dadurch gekennzeichnet, dass** man einen Farbstoff der Formel (1) oder (2) verwendet, worin W einen Rest der Formel (3) bedeutet.

10. Verfahren gemäss einem der Ansprüche 1 bis 9, **dadurch gekennzeichnet, dass** man einen Farbstoff der Formel (1) oder (2) verwendet, worin R₃ Chlor, Methyl oder Methoxy, vor allem jedoch Wasserstoff bedeutet.

11. Verfahren gemäss Anspruch 1, **dadurch gekennzeichnet, dass** man einen Farbstoff der Formel (1) oder (2) verwendet, worin R₉ Methyl und insbesondere Wasserstoff und R₃ Wasserstoff bedeutet.

12. Verfahren gemäss Anspruch 1, **dadurch gekennzeichnet, dass** man einen Farbstoff der Formel (1) oder (2) verwendet, worin B₁ unsubstituiertes oder durch Hydroxy substituiertes C₂-C₄-Alkylen, (C₂-C₆-Alkylen)-O-(C₂-C₆-Alkylen), (C₂-C₆-Alkylen)-O-(C₂-C₆-Alkylen)-O-(C₂-C₆-Alkylen) oder (C₂-C₆-Alkylen)-NR₉-(C₂-C₆-Alkylen) bedeutet.

13. Verfahren gemäss einem der Ansprüche 1 bis 12, **dadurch gekennzeichnet, dass** man einen Farbstoff der Formel (1) oder (2) verwendet, worin W ein Rest der Formel (3) ist, worin Z ein Brückenglied der Formel -NH-CO-, -CO-NH-NH-CO-, 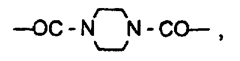 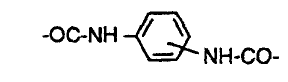 oder -CO-NH-(C₂-C₄-Alkylen)-NH-CO- ist.

14. Verfahren gemäss einem der Ansprüche 1 bis 13, **dadurch gekennzeichnet, dass** man einen Farbstoff der Formel (1) oder (2) verwendet, worin W ein Rest der Formel (3) ist, worin K eine Kupplungskomponente der Formel 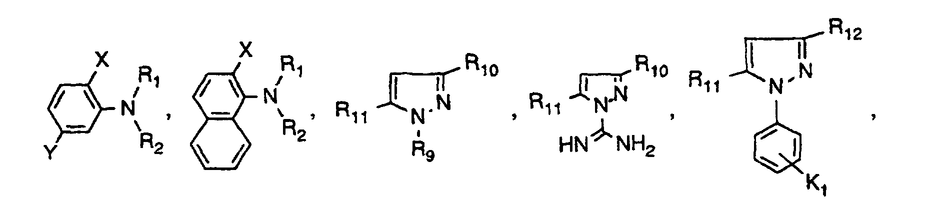 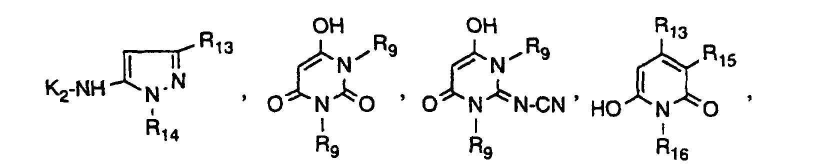 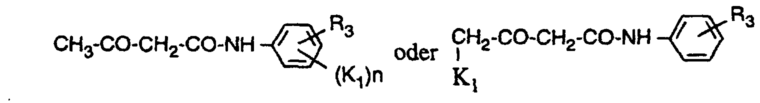 ist, worin X, Y, R₁ und R₂ die unter den Formeln (1) und (2) angegebenen Bedeutungen aufweisen, R₁₀ C₁-C₄-Alkyl, Carboxy oder K₂, R₁₁ Hydroxy oder Amino, R₉ Wasserstoff oder gegebenenfalls substituiertes C₁-C₄-Alkyl, R₁₂ C₁-C₄-Alkyl oder K₂, R₁₃ C₁-C₄-Alkyl, R₁₄ Wasserstoff, gegebenenfalls substituiertes C₁-C₄-Alkyl oder gegebenenfalls substituiertes Phenyl, R₁₅ Wasserstoff, Chlor, Cyan oder Carbonamido, R₁₆ Wasserstoff, gegebenenfalls substituiertes C₁-C₄-Alkyl oder K₃, n 1 oder 2, K₁ 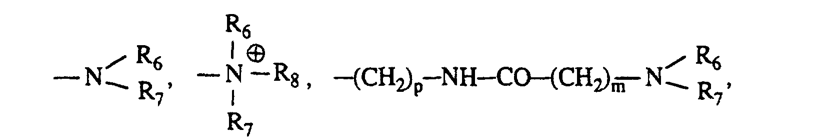 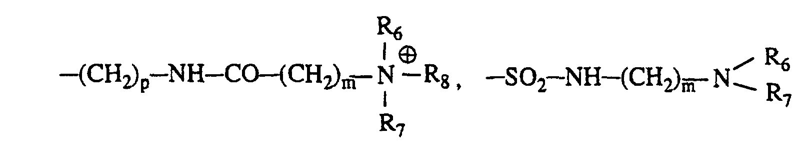 oder 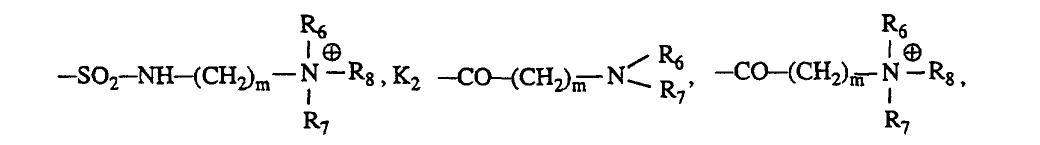 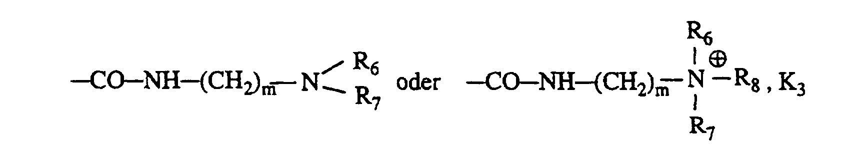 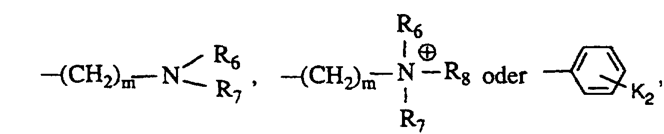 und m 1 bis 4 bedeutet und R₆, R₇ und R₈ die unter den Formeln (6) und (7) angegebenen Bedeutungen aufweisen.

15. Verfahren gemäss Anspruch 14, **dadurch gekennzeichnet, dass** man einen Farbstoff der Formel (1) oder (2) verwendet, worin W ein Rest der Formel (3) ist, worin K eine Kupplungskomponente der Formel

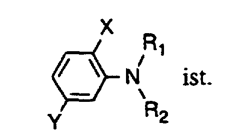

16. Verfahren gemäss einem der Ansprüche 1 bis 15, **dadurch gekennzeichnet, dass** man einen Farbstoff der Formel 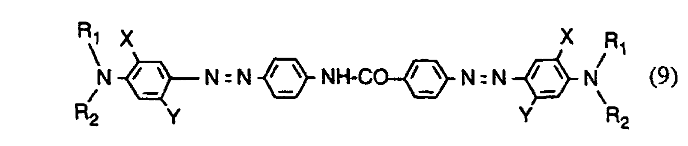 oder 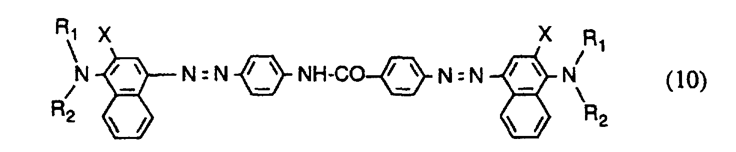 verwendet, worin
X und Y unabhängig voneinander je Wasserstoff, Halogen, C₁-C₄-Alkyl, C₁-C₄-Alkoxy, C₁-C₄-Alkylcarbonylamino, Arylcarbonylamino, Ureido oder Arylureido,
R₁ Wasserstoff, gegebenenfalls substituiertes Alkyl oder Aryl oder R₂ und
R₂ die im Anspruch 1 angegebene Bedeutung hat.

17. Farbstoffe der Formel 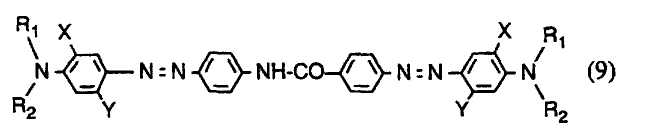 oder 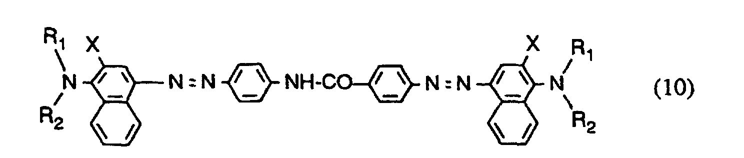 worin
X und Y unabhängig voneinander je Wasserstoff, Halogen, C₁-C₄-Alkyl, C₁-C₄-Alkoxy, C₁-C₄-Alkylcarbonylamino, Arylcarbonylamino, Ureido oder Arylureido,
R₁ Wasserstoff, gegebenenfalls substituiertes Alkyl oder Aryl oder R₂ und
R₂ ein Rest der Formel
―B―Q^{⊕} (8)
ist, worin B ein unverzweigter oder verzweigter Alkylenrest, und
Q^{⊕} einen N-C₁-C₄-alkylpiperidinium, N-C₁-C₄-alkylmorpholinium, N-C₁-C₄-alkylpyrrolidinium, N-C₁-C₄-alkylpiperazinium, N-C₁-C₄-alkylpyridinium-3 oder N-C₁-C₄-alkylpyridinium-4 bedeutet oder worin
R₁ und R₂ zusammen mit dem sie verbindenden N-Atom einen gegebenenfalls substituierten 5-, 6-, oder 7-Ring bilden, der weitere Heteroatome enthalten kann.

## Claims

1. A process for dyeing paper, which comprises treating the paper with a dye of formula 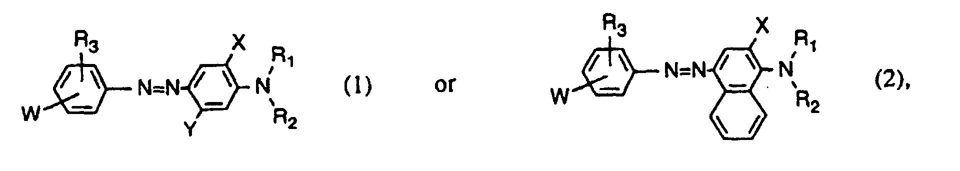 wherein
X and Y are each independently of the other hydrogen, halogen, C₁-C₄alkyl, C₁-C₄alkoxy, C₁-C₄alkylcarbonylamino, arylcarbonylamino, ureido or arylureido,
R¹ is hydrogen, unsubstituted or substituted alkyl or aryl, or has the meaning of R₂,
R₂ is a radical of formula 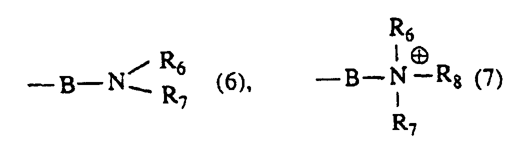 or
―B―Q^{⊕} (8),
wherein B is a straight-chain or branched C₁-C₁₂alkylene radical which may be interrupted by -NH-CO-, -NH-, -O-C₆H₄-, -O-CO-C₆H₄- or -O-CO-, or in which the alkylene chain is linked to the radical Q⊕ through one of these linking groups,
R₆ is hydrogen or unsubstituted or substituted alkyl,
R₇ and R₈ are each independently of the other unsubstituted or substituted alkyl, and
Q^{⊕} is a cyclic cationic radical, or wherein
R₆ and R₇, together with the N atom linking them, form an unsubstituted or substituted 5-, 6-, or 7-membered ring which may contain further heteroatoms, or wherein -NR₆R₇R₈ may also be a pyridinium ring, or wherein
R₁ and R₂, together with the N atom linking them, form an unsubstituted or substituted 5-, 6-, or 7-membered ring which may contain further heteroatoms,
R₃ is hydrogen, halogen, C₁-C₄alkyl or C₁-C₄alkoxy,
W is a radical of formula 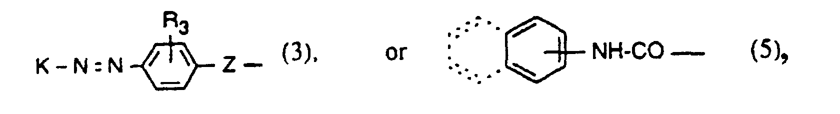 where
K is a coupling component,
Z is a linking group of formula -NR₉-CO-,-CO-NR₉-NR₉-CO-, 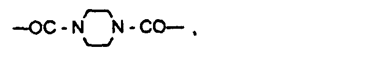 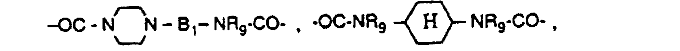 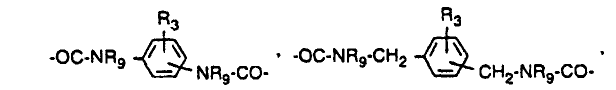 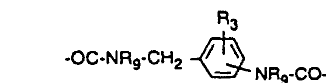 or -CO-NR₉-B₁-NR₉-CO-, where R₉ is hydrogen or unsubstituted or substituted C₁-C₄alkyl, B₁ is a C₂-C₁₂alkylene radical, in which the alkylene chain may be straight-chain or branched and may be interrupted by one or more than one member, preferably by one or two members, selected from -NR₉-, -O- and -S-, and R₃ is hydrogen, halogen, C₁-C₄alkyl or C₁-C₄alkoxy, and where the phenyl ring in the radical W of formula (5) may be substituted by methyl, chloro, hydroxyl, methoxy, phenylazo, 4-carboxyphenylazo or 3-pyridylazo,
with the proviso that in the dyes where W is a radical of formula (3), R₂ is of formula (8) wherein Q⊕ is N-C₁-C₄alkylpiperidinium, N-C₁-C₄alkylmorpholinium, N-C₁-C₄alkylpyrrolidinium, N-C₁-C₄alkylpiperazinium, N-C₁-C₄alkyl-3-pyridinium or N-C₁-C₄alkyl-4-pyridinium, 1-pyridinium or 4-methyl-1-pyridinium.

2. A process according to claim 1, which comprises using a dye of formula (1) or (2) wherein X is hydrogen, methyl, methoxy or chloro.

3. A process according to either claim 1 or claim 2, which comprises using a dye of formula (1) wherein Y is hydrogen, methyl, methoxy, acetylamino or chloro.

4. A process according to claim 1, which comprises using a dye of formula (1) or (2) wherein R₆, R₇ and R₈ are each independently of one another a C₁-C₄alkyl radical which is unsubstituted or substituted by hydroxy, amino, mono-C₁-C₄alkylamino, di-C₁-C₄alkylamino or phenyl, or wherein R₆ and R₇, together with the N atom linking them, form a pyrrolidine, piperidine, morpholine or piperazine ring.

5. A process according to claim 1, which comprises using a dye of formula (1) or (2) wherein Q⊕ is N-C₁-C₄alkylpiperidinium, N-C₁-C₄alkylmorpholinium, N-C₁-C₄alkylpyrrolidinium, N-C₁-C₄alkylpiperazinium, N-C₁-C₄alkyl-3-pyridinium or N-C₁-C₄alkyl-4-pyridinium.

6. A process according to any one of claims 1 to 5, which comprises using a dye of formula (1) or (2) wherein B is a C₂-C₈alkylene radical in which the alkylene chain may be straight-chain or branched or else interrupted by -NH-CO-, -NH-, -O-C₆H₄-, -O-CO-C₆H₄-or -O-CO-, or in which the alkylene chain is linked to the radical Q⊕ through one of these linking groups.

7. A process according to claim 6, which comprises using a dye of formula (1) or (2) wherein B is ethylene, n-propylene, isopropylene or n-butylene.

8. A process according to any one of claims 1 to 7, which comprises using a dye of formula (1) or (2) wherein R₁ is a C₁-C₄alkyl radical or a C₁-C₄alkyl radical which is substituted by chloro, cyano, phenyl, methoxycarbonyl, methoxycarbonyloxy, mono- or di-C₁-C₄alkylamino, the alkyl moieties of which mono- or di-C₁-C₄alkylamino groups may in turn be substituted by hydroxy, amino or mono- or di-C₁-C₄alkylamino.

9. A process according to any one of claims 1 to 8, which comprises using a dye of formula (1) or (2) wherein W is a radical of formula (3).

10. A process according to any one of claims 1 to 9, which comprises using a dye of formula (1) or (2) wherein R₃ is chloro, methyl or methoxy, but is especially hydrogen.

11. A process according to claim 1, which comprises using a dye of formula (1) or (2), wherein R₉ is methyl and, especially, hydrogen and R₃ is hydrogen.

12. A process according to claim 1, which comprises using a dye of formula (1) or (2) wherein B₁ is unsubstituted or hydroxy-substituted C₂-C₄alkylene, (C₂-C₆alkylene) -O- (C₂-C₆alkylene), (C₂-C₆alkylene) -O- (C₂-C₆alkylene)-O-(C₂-C₆alkylene) or (C₂-C₆alkylene) -NR₉-(C₂-C₆alkylene).

13. A process according to any one of claims 1 to 12, which comprises using a dye of formula (1) or (2) wherein W is a radical of formula (3) wherein Z is a linking group of formula -NH-CO-, -CO-NH-NH-CO-, 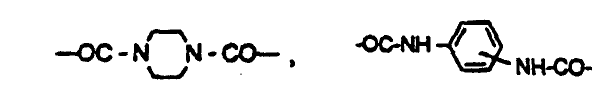 or -CO-NH- (C₂-C₄alkylene)-NH-CO-.

14. A process according to any one of claims 1 to 13, which comprises using a dye of formula (1) or (2) wherein W is a radical of formula (3) wherein K is a coupling component of formula 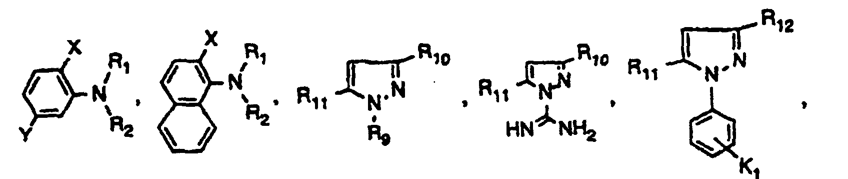 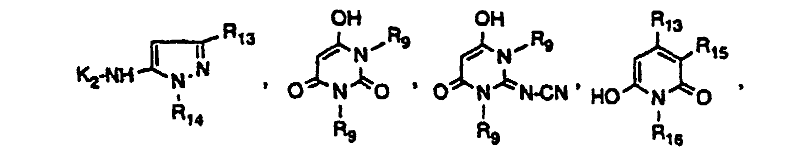 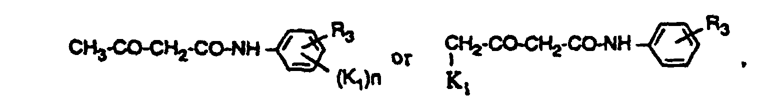 wherein X, Y, R₁ and R₂ have the meanings given under formulae (1) and (2), R₁₀ is C₁-C₄alkyl, carboxy or K₂, R₁₁ is hydroxy or amino, R₉ is hydrogen or unsubstituted or substituted C₁-C₄alkyl, R₁₂ is C₁-C₄alkyl or K₂, R₁₃ is C₁-C₄alkyl, R₁₄ is hydrogen, unsubstituted or substituted C₁-C₄alkyl or unsubstituted or substituted phenyl, R₁₅ is hydrogen, chloro, cyano or carbamoyl, R₁₆ is hydrogen, unsubstituted or substituted C₁-C₄alkyl or K₃, n is 1 or 2, 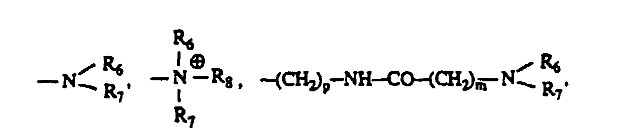 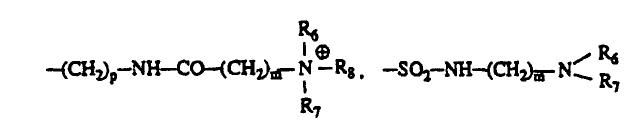 or 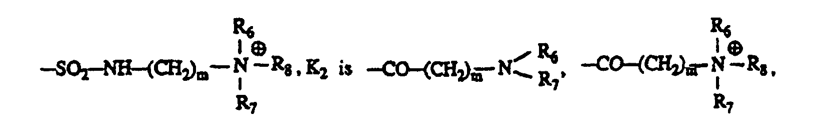 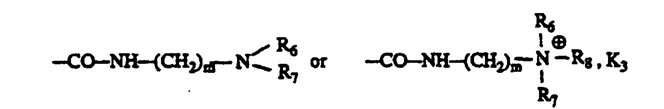 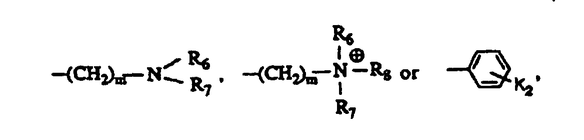 and m is 1 to 4, and R₆, R₇ and R₈ have the meanings given under formulae (6) and (7).

15. A process according to claim 14, which comprises using a dye of formula (1) or (2) wherein W is a radical of formula (3) wherein K is a coupling component of formula

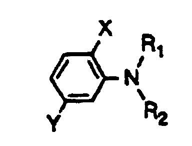

16. A process according to any one of claims 1 to 15, which comprises using a dye of formula 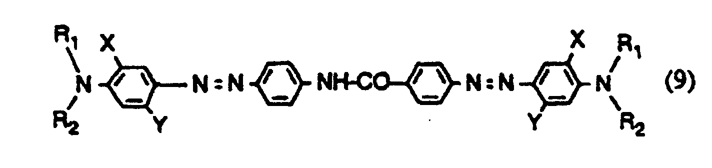 or 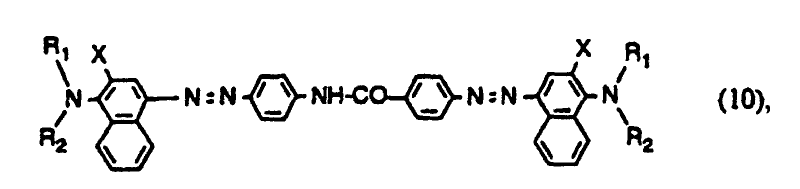 wherein
X and Y are each independently of the other hydrogen, halogen, C₁-C₄alkyl, C₁-C₄alkoxy, C₁-C₄alkylcarbonylamino, arylcarbonylamino, ureido or arylureido,
R₁ is hydrogen, unsubstituted or substituted alkyl or aryl, or has the meaning of R₂, and
R₂ is as defined in claim 1.

17. A dye of formula 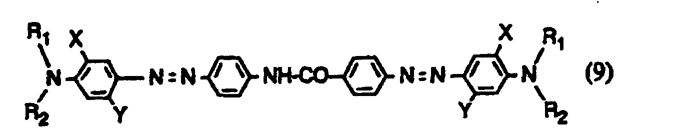 or 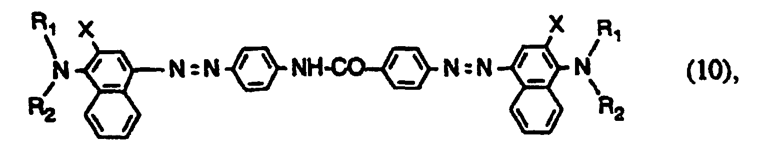 wherein
X and Y are each independently of the other hydrogen, halogen, C₁-C₄alkyl, C₁-C₄alkoxy, C₁-C₄alkylcarbonyl-amino, arylcarbonylamino, ureido or arylureido,
R₁ is hydrogen, unsubstituted or substituted alkyl or aryl, or has the meaning of R₂, and
R₂ is a radical of formula -B-Q^{⊕} (8) wherein B is an unbranched or branched alkylene radical, and wherein Q⊕ is N-C₁-C₄alkylpiperidinium, N-C₁-C₄alkylmorpholinium, N-C₁-C₄alkylpyrrolidinium, N-C₁-C₄alkylpiperazinium, N-C₁-C₄alkyl-3-pyridinium or N-C₁-C₄alkyl-4-pyridinium, or wherein
R₁ and R₂, together with the N atom linking them, form an unsubstituted or substituted 5-, 6-, or 7-membered ring which may contain further heteroatoms.

## Revendications

1. Procédé pour la coloration de papier, **caractérisé en ce qu'**on traite le papier par un colorants de formule 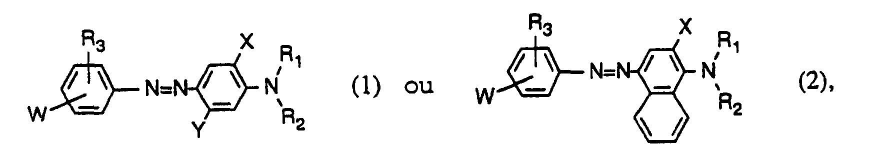 où
X et Y représentent, indépendamment l'un de l'autre, un atome d'hydrogène, un atome d'halogène, des groupes alkyle en C₁-C₄, alkoxy en C₁-C₄, (alkyl en C₁-C₄)carbonylamino, arylcarbonylamino, uréido ou aryluréido,
R₁ représente un atome d'hydrogène, des groupes alkyle ou aryle éventuellement substitué ou R₂,
R₂ représente un reste de formule 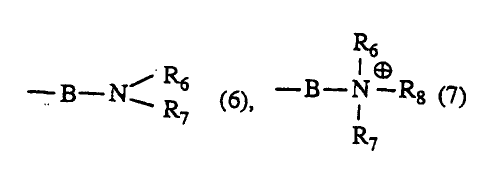 ou
―B―Q^{⊕} (8),
où
B représente un reste alkylène en C₂-C₁₂ linéaire ou ramifié, qui peut être interrompu par -NH-CO-, -NH-, -O-C₆H₄-, O-CO-C₆H₄- ou -O-CO- ou dans lequel la chaîne alkylène est reliée au reste Q^{⊕} par l'intermédiaire d'un de ces éléments de pontage,
R₆ représente un atome d'hydrogène ou un groupe alkyle éventuellement substitué,
R₇ et R₈ représentent chacun, indépendamment l'un de l'autre, un groupe alkyle éventuellement substitué et Q^{⊕} un reste cyclique cationique, ou dans lequel
R₆ et R₇ forment, ensemble avec l'atome d'azote qui les relie, un cycle à 5, 6 ou 7 chaînons éventuellement substitué, qui peut contenir d'autres hétéroatomes, ou dans lequel -NR₆R₇R₈ peut aussi représenter un cycle pyridinium,
ou
R₁ et R₂ forment, ensemble avec l'atome d'azote qui les relie, un cycle à 5, 6 ou 7 chaînons éventuellement substitué, qui peut contenir d'autres hétéroatomes,
R₃ représente un atome d'hydrogène, des groupes alkyle en C₁-C₄ ou alkoxy en C₁-C₄,
W représente un reste de formule 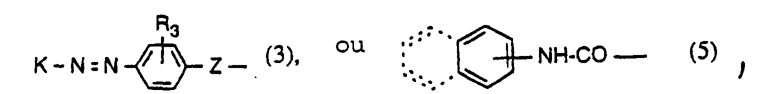 où
K représente un composant de copulation,
Z représente un élément de pontage de formule -NR₉-CO-,-CO-NR₉-NR₉-CO-, 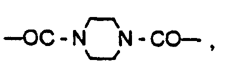 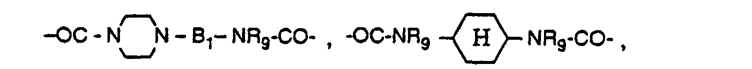 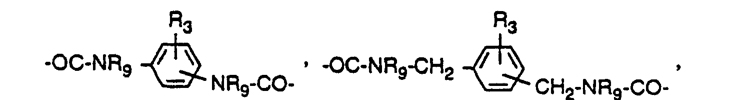 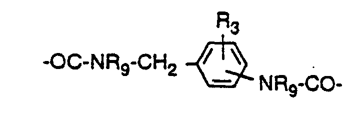 ou -CO-NR₉-B₁-NR₉-CO-, où
R₉ représente un atome d'hydrogène ou un groupe alkyle en C₁-C₄ éventuellement substitué,
B₁ représente un reste alkylène en C₂-C₁₂, dans lequel la chaîne alkylène est droite ou ramifiée et peut être interrompue une ou plusieurs fois, notamment un ou deux fois, par des groupes -NR₉-, -O- ou -S-, et
R₃ représente un atome d'hydrogène, un atome d'halogène, des groupes alkyle en C₁-C₄ ou alkoxy en C₁- C₄,
et le cycle phényle dans le reste W de formule (5) pouvant être substitué par des substituants méthyle, chloro, hydroxy, méthoxy, phénylazo, 4-carboxyphénylazo ou 3-pyridylazo.
à condition que dans les colorants, où W représente un reste de formule (3)
R₂ réponde à la formule (8), où Q^{⊕} représente des groupes N-(alkyl en C₁-C₄)pipéridinium, N-(alkyl en C₁-C₄)morpholinium, N-(alkyl en C₁-C₄)pyrrolidinium, N-(alkyl en C₁-C₄)-pipérazinium, N-(alkyl en C₁-C₄)-pyridinium-3, N-(alkyl en C₁-C₄)pyridinium-4, pyridinium-1 ou 4-méthylpyridinium-1.

2. Procédé selon la revendication 1,
**caractérisé en ce qu'**on utilise un colorant de formules (1) ou (2), où X représente un atome d'hydrogène, des groupes méthyle, méthoxy ou chloro.

3. Procédé selon l'une des revendications 1 ou 2, **caractérisé en ce qu'**on utilize un colorant de formule (1), où Y représente un atome d'hydrogène, des groupes méthyle, méthoxy, acétylamino ou chloro.

4. Procédé selon la revendication 1,
**caractérisé en ce qu'**on utilise un colorant de formule (1) ou (2), où R₆, R₇ et R₈ représentent, indépendamment les uns des autres, un reste alkyle en C₁-C₄, qui est non substitué ou substitué par des substituants hydroxy, amino, mono (alkyl en C₁-C₄)amino, di(alkyl en C₁-C₄)amino ou phényle, ou dans laquelle R₆ et R₇ forment, ensemble l'atome d'azote qui les relie, un cycle pyrrolidine, pipéridine, morpholine ou pipérazine.

5. Procédé selon la revendication 1, **caractérisé en ce qu'**on utilise un colorant de formule (1) ou (2), où Q^{⊕} représente N-(alkyl en C₁-C₄)-pipéridinium, N-(alkyl en C₁-C₄)-morpholinium, N-(alkyl en C₁-C₄)-pyrrolidinium, N-(alkyl en C₁-C₄)-pipérazinium, N-(alkyl en C₁-C₄)-pyridinium-3 ou N-(alkyl en C₁-C₄)pyridinium-4.

6. Procédé selon l'une des revendications 1 à 5, **caractérisé en ce qu'**on utilise un colorant de formules (1) ou (2), où B représente un reste alkylène en C₂-C₈, où la chaîne alkylène peut être linéaire ou ramifiée ou interrompue par des groupes -NH-CO, -NH-, -O-C₆H₄-, -O-CO-C₆H₄- ou -O-CO- ou dans lequel la chaîne alkylène est liée au reste Q^{⊕} par l'intermédiaire d'un de ces éléments de pontage.

7. Procédé selon la revendication 6, **caractérisé en ce qu'**on utilise un colorant de formules (1) ou (2), où B représente éthylène, n-propylène, iso-propylène ou n-butylène.

8. Procédé selon l'une des revendications 1 à 7, **caractérisé en ce qu'**on utilise un colorant de formules (1) ou (2), où R₁ représente un reste alkyle en C₁-C₄, qui est substitué par des substituants chloro, cyano, phényle, méthoxycarbonyle, méthoxy-carbonyloxy, mono- ou di-(alkyl en C₁-C₄)amino, les restes alkyle dans les groupes mono- ou di-(alkyl en C₁-C₄) amino peuvent être substitués à leur tour par des substituants hydroxy, amino ou mono- ou di-(alkyl en C₁-C₄) amino.

9. Procédé selon l'une des revendications 1 à 8, **caractérisé en ce qu'**on utilize un colorant de formules (1) ou (2), où W représente un reste de formule (3).

10. Procédé selon l'une des revendications 1 à 9, **caractérisé en ce qu'**on utilise un colorant de formules (1) ou (2), où R₃ représente des groupes chloro, méthyle ou méthoxy, mais avant tout un atome d'hydrogène.

11. Procédé selon la revendication 1,
**caractérisé en ce qu'**on utilise un colorant de formules (1) ou (2), où R₉ représente un groupe méthyle et en particulier un atome d'hydrogène et R₃ représente un atome d'hydrogène.

12. Procédé selon la revendication 1,
**caractérisé en ce qu'**on utilise un colorant de formules (1) ou (2), où B₁ représente des groupes alkylène en C₂-C₄, (alkylène en C₂-C₆)-O-(alkylène en C₂-C₆), (alkylène en C₂-C₆)-O-(alkylène en C₂-C₆)-O-(alkylène en C₂-C₆) ou (alkylène en C₂-C₆)-NR₉-(alkylène en C₂-C₆) non substitué ou substitué par un substituant hydroxy.

13. Procédé selon l'une des revendications 1 à 12, **caractérisé en ce qu'**on utilise un colorant de formule (1) ou (2), où W représente un reste de formule (3), où Z représente un élément de pontage de formule -NH-CO-, -CO-NH-NH-CO-, 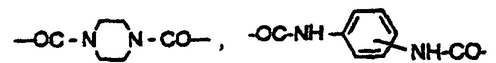 ou -CO-NH-(alkylène en C₂-C₄)-NH-CO.

14. Procédé selon l'une des revendications 1 à 13, **caractérisé en ce qu'**on utilise un colorant de formules (1) ou (2), où W représente un reste de formule (3), où K représente un composant de copulation de formule 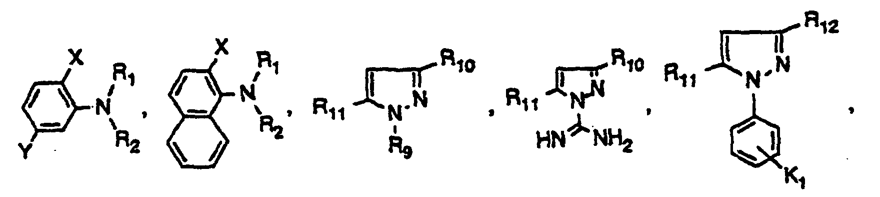 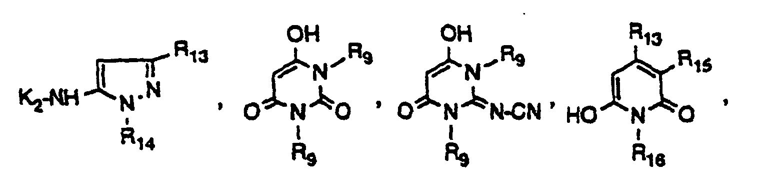 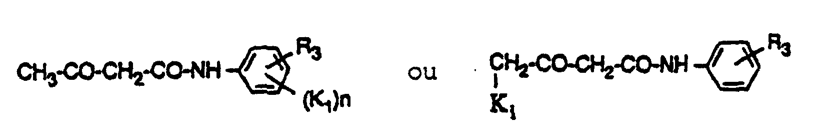 où
où X, Y, R₁ et R₂ présentent les significations données aux formules (1) et (2), R₁₀ représente des groupes alkyle en C₁-C₄, carboxy ou K₂, R₁₁ représente un groupe hydroxy ou amino, R₁₂ représente un groupe alkyle en C₁-C₄ ou K₂, R₁₃ représente des groupes alkyle en C₁-C₄, R₁₄ représente un atome d'hydrogène, un groupe alkyle en C₁-C₄ éventuellement substitué ou un groupe phényle éventuellement substitué, R₁₅ représente un atome d'hydrogène, un atome de chlore, des groupes cyano ou carboxamido, R₁₆ représente un atome d'hydrogène, un groupe alkyle en C₁-C₄ éventuellement substitué ou K₃, n vaut 1 ou 2, K₁ représente 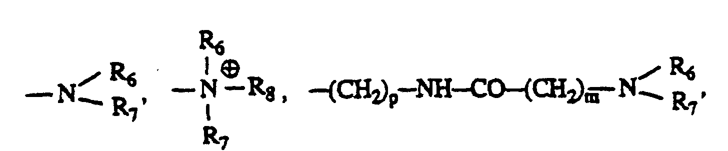 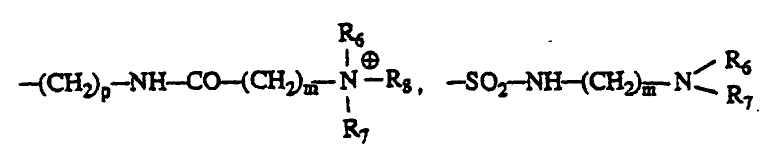 ou 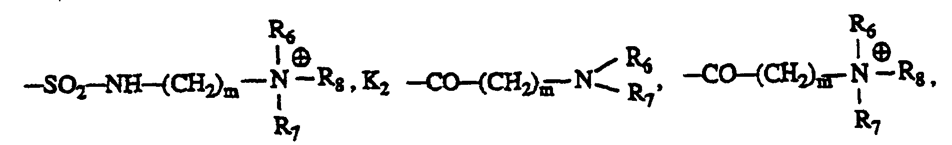 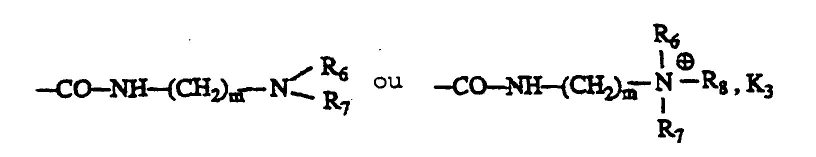 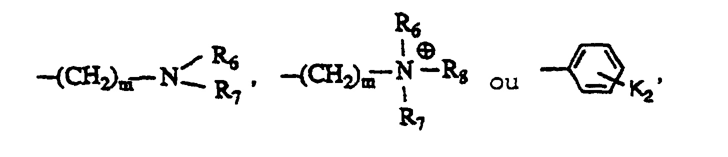 et m va de 1 à 4 et R₆, R₇ et R₈ possèdent les significations données aux formules (6) et (7).

15. Procédé selon la revendication 14,
**caractérisé en ce qu'**on utilise un colorant de formules (1) ou (2), où W représente un reste de formule (3), où K représente un composant de copulation de formule

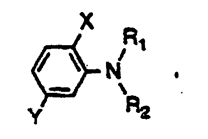

16. Procédé selon l'une des revendications 1 à 15, **caractérisé en ce qu'**on utilise un colorant de formule 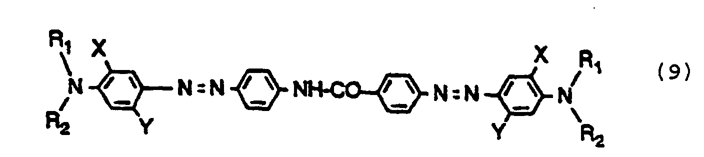 ou 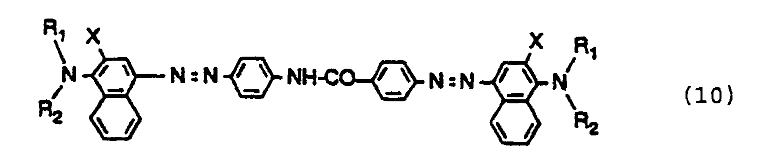 où
X et Y représentent, indépendamment l'un de l'autre, un atome d'hydrogène, un atome d'halogène, des groupes alkyle en C₁-C₄, alkoxy en C₁-C₄, (alkyl en C₁-C₄)carbonylamino, arylcarbonylamino, uréido ou aryluréido,
R₁ représente un atome d'hydrogène, des groupes alkyle ou aryle éventuellement substitué ou R₂,
et
R₂ possède la signification à la revendication 1.

17. Colorants de formule 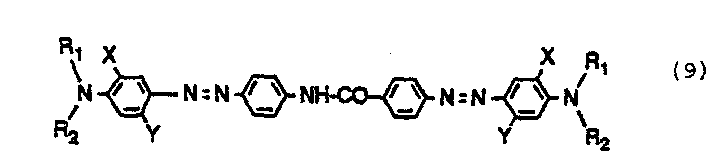 ou 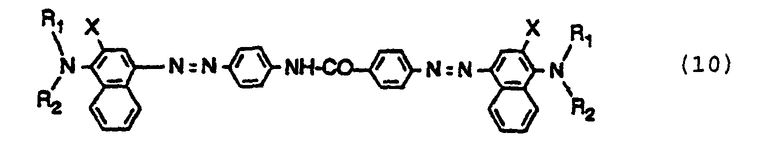 où
X et Y représentent, indépendamment l'un de l'autre, un atome d'hydrogène, un atome d'halogène, des groupes alkyle en C₁- C₄, alkoxy en C₁-C₄, (alkyl en C₁-C₄)carbonylamino, arylcarbonylamino, uréido ou aryluréido,
R₁ représente un atome d'hydrogène, des groupes alkyle ou aryle éventuellement substitué ou R₂, et
R₂ représente un reste de formule ―B―Q^{⊕} (8) où B représente un reste alkylène linéaire ou ramifié, et Q^{⊕} représente des groupes groupes N-(alkyl en C₁-C₄) -pipéridinium, N-(alkyl en C₁-C₄)-morpholinium, N-(alkyl en C₁-C₄)pyrrolidinium, N-(alkyl en C₁-C₄)-pipérazinium, N-(alkyl en C₁-C₄)-pyridinium-3, ou N-(alkyl en C₁-C₄)pyridinium-4, pyridinium- ou dans lesquelles
R₁ et R₂ forment ensemble avec l'atome d'azote qui les relie, un cycle à 5, 6 ou 7 chaînons, qui peut contenir d'autres hétéroatomes.
